# EUROPÄISCHE PATENTANMELDUNG

(11) **EP 1 489 718 A2**
(43) Veröffentlichungstag der Anmeldung: **22.12.2004**
(21) Anmeldenummer: 04013865.3
(22) Anmeldetag: 14.06.2004
(51) Int. Cl.: H02J 13/00

(54) **Elektrisches Installationsgerät**

(30) Priorität: 17.06.2003 DE 10327504
(71) Anmelder: Theben AG, 72401 Haigerloch (DE)
(72) Erfinder: Lohmüller, Peter Dipl.Ing, 72414 Rangendingen/Höfendorf (DE)
(74) Vertreter: Neymeyer, Franz, Dipl.-Ing. (FH)

(57) **Zusammenfassung**

Die Erfindung betrifft ein Installationssystem zur Steuerung einer elektrischen Gebäudeinstallation mit einer programmierbaren Recheneinheit, welcher zur Schaltung elektrischer Verbraucher (70, 71, 72, 73) über Steuerleitungen Steuersignale zuführbar sind. Zur Schaffung einer einfachen und kostengünstigen Realisierungsalternative für Mehrwertfunktionen ist vorgesehen, daß die Recheneinheit mehrere, unterschiedliche Schaltvorgänge steuernde Funktionsgruppen (I1, I2, I3, I4, ZE, ZA, AW) zur Steuerung von Standard- und Zentralfunktionen (ZE, ZA, AW) aufweist, die wahlweise einem oder mehreren Eingängen (I1, I2, I3, I4, ZE, ZA, AW) der Recheneinheit zuordenbar sind, und daß einzelne oder alle Funktionsgruppen (I1 bis I4) einem oder mehreren Ausgängen (C1, C2, C3, C4, D1, D2) der Recheneinheit derart zuordenbar sind, daß bei anliegen eines Steuersignals an einem der Eingänge (I1 bis I4, ZE, ZA, AW) die Verbraucher (70 bis 73) der entsprechend zugeordneten Ausgänge gleichzeitig mit der entsprechenden Schaltfunktion der aktivierten Funktionsgruppe (I1 bis I4, ZE, ZA, AW) schaltbar sind.

## Beschreibung

Die Erfindung betrifft ein Installationssystem zur Steuerung einer elektrischen Gebäudeinstallation mit einer programmierbaren Recheneinheit, welcher zur Schaltung elektrischer Verbraucher über Steuerleitungen Steuersignale zuführbar sind.

Heute wird im Wohnungsbau und im kleineren Objektbau noch immer vorwiegend die traditionelle Elektroinstallation realisiert, deren Basis das Schalten der Beleuchtung, d.h. die einfache Verdrahtung von Lichtschaltern, Dimmern und lichttechnischen Verbrauchern in 230 V-Technik ist. In den letzten Jahren sind jedoch die Anforderungen an die elektrische Gebäudeinstallation gestiegen und es treten Eigenschaften wie Komfort, Mehrwert, Ambiente, Energieeinsparung und Sicherheit immer mehr in den Vordergrund. So besteht nun zunehmend der Bedarf an sogenannter höherwertiger Mehrwert-Elektroinstallation. D.h., daß über das einfache Ein- und Ausschalten elektrischer Verbraucher wie Beleuchtung, Rolladen, Dimmer, usw. hinaus auch sogenannte Zentralfunktionen immer häufiger, insbesondere auch im privaten Wohnungsbau von Bedeutung sind. Die wichtigsten Mehrwertfunktionen stellen dabei die raumübergreifenden Funktionen "Zentral-EIN", "Zentral-AUS" zum Schalten der Beleuchtung und auch eine realistische Anwesenheitssimulation durch automatisches, zeitgesteuertes Schalten der Deckenbeleuchtung dar. Zusätzliche Bedürfnisse werden danach vor allem in der selbsttätigen Ausschaltung der Beleuchtung zum Beispiel in Treppenhäusern oder Kellerräumen, der komfortablen Realisierung der Lichtdimmung, der Spannungsfreischaltung von Wohnungen und Schlafräumen und der automatischen Rolladensteuerung gesehen, wobei diese Funktionen keine Insellösungen darstellen sollen, sondern in die raumübergreifenden Zentralfunktionen einzubinden sind.

Solche Mehrwertfunktionen lassen sich mit der traditionellen Elektroinstallation nur eingeschränkt erfüllen. Für die Realisierung einzelner Wünsche findet man im Stand der Technik verschiedene konventionelle Produkte und Insellösungen in der herkömmlichen Elektrotechnik, wie z.B. Ferntastsysteme, Stromstoßschalter mit Rückfallverzögerung oder Stromstoßschalter für Zentralsteuerungen, Simulationsschalter usw. Diese Insellösungen haben jedoch den Nachteil, daß sie immer mit einem erheblichen Installationsaufwand in den Bauobjekten verbunden sind. Dies ist sehr teuer und auch aufwendig. So lassen sich wichtige Verknüpfungen von verschiedenen Leuchten im Sinne einer Zentralfunktion bei konventioneller Installation nur extrem aufwendig realisieren. Dies hat zur Folge, daß die genannten Produkte heute nur extrem selten eingesetzt werden.

Zur Erfüllung dieser Mehrwertanforderungen wird bisher die traditionelle Elektroinstallation komplett verlassen. Unter dem Schlagwort "Bussystem" für moderne Elektroinstallationen werden die verschiedensten Systeme angeboten, die für die Daten- und Signalübertragung, und damit für die Verbrauchersteuerung, im Gebäude geführte Busleitungen verwenden. Aus der DE 44 25 876 A1 ist beispielsweise eine sogenannte intelligente Steckdose bekannt, welche mit Hilfe eines über ein Starkstromnetz arbeitendes seriellen Bussystems ansteuerbar ist.

Weiter ist aus der DE 196 40 300 A1 ein Installationssystem in Verbindung mit der Bustechnologie bekannt geworden, das mittels eines an einen Applikationsbaustein anschließbaren Steuerbausteins von einer ersten in eine zweite Installationsebene und darüber hinaus mittels eines Busverbinders zu einer dritten Installationsebene hochgerüstet werden kann. Die dritte Installationsebene ermöglicht hier eine Verknüpfung von programmierbaren Applikationsfunktionen mit Funktionen eines EIB-Bussystem.

Auch die DE 195 44 027 C2 beschreibt ein Bussystem zur Steuerung elektrischer Installationen. Dabei sind mehrere Busteilnehmer vorgesehen, welche Steuermittel zur Kommunikation mit wenigstens einem anderen Busteilnehmer aufweisen, wobei zwei oder mehrere Busteilnehmer zeitgleich ohne Prioritätszuweisung unter Zulassung zeitlich sich überlagernder Signale ohne zusätzliche Korrekturmaßnahmen unter Inkaufnahme eines fehlerhaften Empfangs zugriffsberechtigt sind und wenigstens eine zur Phase und Nulleiter zusätzliche Busleitung vorhanden ist.

Zur näheren Funktionsweise dieser beispielhaft bekannten Bussysteme wird voll inhaltlich auf die genannten Druckschriften verwiesen.

Diesen Bussystemen ist gemeinsam, daß durch die digitale Kommunikation, die zwischen allen beteiligten Komponenten über die Busleitungen erfolgt und durch das Austauschen von Befehlen zwischen Steuerorganen und elektrischen Verbrauchern die notwendige Flexibilität ermöglicht wird. Dabei werden entweder sogenannte intelligente Verbraucher verwendet, in welche jeweils eine eigene Busankopplung integriert ist oder es werden Schaltaktoren für den Einbau im Verteilerschrank verwendet, welche die vom Gebäudebus zugeführten Signale analysieren und entsprechend zugeordnete Schalteinrichtungen, wie beispielsweise Relais, entsprechend der Steuersignale schalten.

Wird nun mittels eines Schalters, der ebenfalls über einen eigenen Bus-Koppelbaustein in die Busleitung eingeschaltet ist, ein Signal auf den Bus gegeben, so kann jedes Gerät mittels seiner Bus-Kopplung das für ihn spezifische Signal auswählen. D.h., jedes Gerät wird definiert angesprochen und somit der Verbraucher bzw. ein Schaltausgang des Schaltaktors bedient. Bei Verwendung von Schaltaktoren werden folglich keine Busleitungen mehr direkt an die Verbraucher geführt, sondern die Verbraucher werden direkt mit der Lastleitung angesteuert.

Bekannt sind neben diesen großen, gewerkeübergreifenden Bussystemen auch eine Vielzahl an firmenindividuellen Elektroinstallations- und Gebäudebussystemen.

Neben der drahtgebundenen Datenübertragung finden sich auch Produktkonzepte, welche die erforderlichen Kommunikationssignale über Funk oder über eine Trägerfrequenz, die der Netzspannung aufmoduliert wird übertragen. Bei all diesen Bussystemen sind jedoch die zu verwendenden Schalter und Schaltaktoren sowie teilweise auch die Verbraucher selbst infolge der vorzusehenden Busankopplung gegenüber herkömmlichen Schaltern und Verbrauchern erheblich teurer. Weiterhin muß bei den meisten Bussystemen die Elektroverkabelung um spezielle Bus-Steuerleitungen ergänzt werden. Für größere Zweckbauten wie Bürogebäude, Banken, Schulen, usw. haben sich diese Bussysteme aufgrund ihrer vielfältigen Möglichkeiten etabliert. In kleineren Objekten und vor allem im privaten Wohnungsbau verhindern die Systemkomplexität und die hohen Systemkosten die Durchdringung.

Bei solchen Systemen, bei welcher eine Trägerfrequenz der Netzspannung aufmoduliert wird, ist zusätzlich die Signalausbreitung auf der Netzleitung nicht unproblematisch. Unter Umständen können Verbraucher den Bus stören und es werden deshalb häufig Filter und Signalaufbereiter in Form von sogenannten Repeatern erforderlich.

Da die bekannten Bussysteme je nach Hersteller individuell aufgebaut sind, liegt die Problematik für die Installateure und Bauherren neben den äußerst hohen Kosten zusätzlich in der Abhängigkeit von einem speziellen Hersteller, insbesondere was Schalter und Taster betrifft, die zu dem verwendeten System kompatibel sein müssen oder zumindest um ganz spezielle Busankoppler zu ergänzen sind. Weiter sind Spezialkenntnisse für die Inbetriebenahme und Installation solcher Bussysteme notwendig, so daß insbesondere für die Installateure zusätzlich Kosten für Schulungen, Personal und Ausrüstung und für die in der Regel speziell notwendige PC-Software entstehen.

Weiter ist bei solchen Bussystemen der Installationsaufwand sehr hoch, da zusätzlich stets spezielle Busleitungen für die Kommunikation in Form von abgeschirmten Datenübertragungsleitungen notwendig sind. Auch die Anforderungen für den Service beispielsweise zum Austausch eines Tasters sind um ein vielfaches höher, da stets ein Laptop notwendig ist, um die Anlage neu programmieren und das neue Gerät einbinden zu können.

Weiter sind aus der Automatisierungstechnik sogenannte SPS-Systeme (Speicher programmierte Steuerung) und auch sogenannte Kleinsteuerungen bekannt, die von Schaltschrank- und Anlagenbauern verwendet werden. Insbesondere die verdrahtungsprogrammierbaren Kleinsteuerungen finden zunehmend auch in der klassischen Elektroinstallationsbranche Verwendung. Bei Kleinsteuerungen handelt es sich um kompakte Schaltgeräte, die durch ihre Vielzahl der integrierten Funktionsbausteine universell für verschiedenste Einsatzbereiche eingesetzt werden können. Die Realisierung im Wohnungsbau für die erforderlichen Installationslösungen erfordert allerdings eine sehr aufwendige und komplexe Programmierung und Parametrierung solcher Systeme. Weiter haben solche Kleinsteuerungen den Nachteil, daß sie für die Anforderungen der Automatisierungstechnik optimiert sind und somit die Anforderungen in Bezug auf die technischen Erfordernisse für eine Gebäudeinstallation (zum Beispiel 16 A Schaltleistung, potentialfreie Kontakte) nicht oder nur unzureichend abgedeckt werden. Weiter ist es zur Realisierung einer Mehrwert-Elektro-Installation im Wohnungsbau bei solchen Systemen nachteilig, daß sie für die Verknüpfung beliebiger Funktionen per Software konzipiert sind, was die Programmierung von komplexen Applikation mit sich bringt.

Dies bedeutet, daß aus dem Stand der Technik eine Vielzahl an Einzelgeräten und unterschiedlich aufgebauter Gebäude-Systemsteuerungen bekannt sind. Es gibt jedoch Heute noch keine Möglichkeit, mit normaler Elektroinstallation einfach, schnell, günstig und zuverlässig die im Wohnungsbau erforderlichen, sogenannten "Mehrwertfunktionen" zu realisieren.

Es werden heute somit lediglich Einzelgeräte für die raumbezogenen Funktionen und Systeme und Busgeräte für raumübergreifende Funktionen angeboten. Dazwischen herrscht eine Lücke, welche durch die verschiedenen Einzelgeräte und Inselsysteme nicht geschlossen werden kann, da diese auf die Realisierung von Funktionen konzipiert sind, jedoch nicht auf die Realisierung von sinnvoller, objektbezogener Elektroinstallation. Die vorhandenen konventionellen Lösungsangebote in 230 V-Technik beruhen auf dem Prinzip, daß man Geräte anbauen und sich dann damit eine Lösung für das Bauobjekt konzipieren kann.

Der Erfindung liegt demgemäß die Aufgabe zugrunde, eine einfache und kostengünstige Realisierungsalternative für Mehrwertfunktionen zu schaffen, die den Installationsaufwand gering hält und auf komplexe und teuere System verzichtet.

Die Aufgabe wird erfindungsgemäß dadurch gelöst, daß in der Recheneinheit mehrere, unterschiedliche Schaltvorgänge steuernde Funktionsgruppen zur Steuerung von Standard- und Zentralfunktionen gespeichert sind, die wahlweise einem oder mehreren Eingängen der Recheneinheit zuordenbar sind, und daß einzelne oder alle Funktionsgruppen einem oder mehreren Ausgängen der Recheneinheit derart zuordenbar sind, daß bei Anliegen eines Steuersignals an einem der Eingänge die an den entsprechend zugeordneten Ausgängen angeschlossenen Verbraucher gleichzeitig mit der entsprechenden Schaltfunktion der aktivierten Funktionsgruppe schaltbar sind und, daß die Recheneinheit für die Zuordnung der Zentralfunktionen zu den Ausgängen zusätzlich mit manuell bedienbaren Tastern versehen ist.

Durch die erfindungsgemäße Ausgestaltung wird ein Installationssystem zu Verfügung gestellt, bei welchem die Steuerung mit ihrer Recheneinheit alle notwendigen Schaltfunktionen für unterschiedliche Funktionsgruppen zur Steuerung von Standard- und Zentralfunktionen enthält, die wahlweise einem oder mehreren Eingängen zuordenbar sind. Weiter sind diese Funktionsgruppen auch einem oder mehreren Ausgängen der Recheneinheit zuordenbar, so daß bei entsprechend anliegendem Steuersignal an einem der Eingänge die Verbraucher der entsprechend zugeordneten Ausgänge gleichzeitig mit der entsprechenden Schaltfunktion der aktivierten Funktionsgruppe schaltbar sind. Die Zuordnung der Eingänge und Ausgänge kann dabei durch eine Programmierung der Recheneinheit erfolgen.

Für die Zuordnung der Zentralfunktionen zu den Ausgängen sind desweiteren zusätzlich manuell zur programmierbaren Zuordnung bedienbare Tastschalter vorgesehen, so daß diese Zuordnung ohne weitere Programmierung direkt am Schaltmodul bzw. dessen Recheneinheit vornehmbar ist. Durch diese Ausgestaltung wird eine erheblich vereinfachte Installation ermöglicht, so daß insbesondere der Installateur nicht über besondere Programmierkenntnisse verfügen muß. Es genügt einfach eine korrekte Verdrahtung der Eingänge und der Ausgänge für eine korrekte Funktionsweise des Installationssystems. Dabei sind als Zentralfunktionen beispielsweise "Zentral-EIN", "Zentral-AUS" oder auch eine Anwesenheitssimulation vorgesehen, wobei durch eine entsprechende Verdrahtung der Ein- und Ausgänge sowie Programmierung der Recheneinheit auch noch weitere Zentralfunktionen realisierbar sind. Speziell die Zentralfunktionen können in einfachster Weise durch die erfindungsgemäße Ausgestaltung den gewünschten Ausgängen durch "Tastendruck" zugeordnet werden, so daß bei anliegen eines entsprechenden Steuersignals am entsprechend zugehörigen Eingang auch die entsprechenden Verbraucher gleichzeitig schaltbar sind. Dabei ist auch vorgesehen, daß die Standardfunktionen auf dieselben Ausgänge einstellbar sind wie die Zentralfunktionen. Dies bedeutet, daß mit dem erfindungsgemäßen Installationssystem über den "normalen Lichtschalter" der Recheneinheit ein Steuersignal zuführbar ist, welches eine Durchschaltung der Versorgungsleitung zur entsprechenden Beleuchtungseinrichtung im Raum bewirkt. D.h., daß vom entsprechend für die Standardfunktion ausgewählten Ausgang der gewünschte Verbraucher direkt ansteuerbar ist. Da diese Ausgänge wahlweise zusätzlich mit einer Zentralfunktion oder auch mit mehreren Zentralfunktionen in einfachster Weise belegbar sind, ist lediglich noch eine entsprechende Verdrahtung der Eingänge zu den Schaltern notwendig, um sowohl die Standardfunktionen am jeweiligen Ausgang als auch die gewünschten Zentralfunktionen am selben Ausgang bewirken zu können.

Gemäß Anspruch 2 kann vorgesehen sein, daß die Recheneinheit Funktionsgruppen aufweist, die zentrale Schaltvorgänge bewirken, und daß jeder Funktionsgruppe ein Zentraleingang zugeordnet ist und, daß die Zentralfunktionen wahlweise mehreren identischen und/oder verschiedenen Ausgängen zuordenbar sind. Durch diese Ausgestaltung wird insbesondere die Verdrahtung erheblich vereinfacht. Jeder Funktionsgruppe, die einen zentralen Schaltvorgang bewirkt, ist ein Zentraleingang zugeordnet. Das heißt, daß dieser Zentraleingang mit einem Schalter oder Taster im Wohnraum verbunden ist, durch dessen Betätigung dieser Zentraleingang aktivierbar und die zugehörige Zentralfunktion auslösbar ist. Durch die wahlweise Zuordnung einer Zentralfunktion zu verschiedenen Ausgängen können somit gleichzeitig unterschiedliche Verbraucher geschaltet werden. Gemäß Anspruch 2 ist auch vorgesehen, daß auf dieselben Ausgänge auch verschiedene Zentralfunktionen aufschaltbar sind, so daß beispielsweise für eine Beleuchtungseinrichtung über die unterschiedlichen Zentraleingänge jedem Verbraucher unterschiedliche Zentralfunktionen zuordenbar sind. So können beispielsweise die Zentralfunktionen "Zentral-EIN", "Zentral-AUS" oder auch eine Anwesenheitssimulation auf mehrere identische Ausgänge gelegt werden, so daß jeder Verbraucher entsprechend der aktivierten Zentralfunktion über die Ausgänge schaltbar ist.

Gemäß Anspruch 3 kann vorgesehen sein, daß wenigstens ein Standardeingang vorgesehen ist, welcher einer oder mehreren Funktionsgruppen zuordenbar ist, die einen zentralen Schaltvorgang bewirken und, daß der Standardeingang einer Funktionsgruppe zuordenbar ist, die eine Standardfunktion bewirkt und, daß der Standardeingang mit einer Signalserkennungsschaltung versehen ist, durch welche unterschiedliche, am Standardeingang anliegende Schaltsignale auswertbar sind und, daß die Recheneinheit in Abhängigkeit des jeweiligen Eingangssignals die Standardfunktion oder die Zentralfunktion aktiviert. Durch diese zusätzliche Schaltmöglichkeit sind sowohl die Standardfunktion als auch eine Zentralfunktion schaltbar, so daß beispielsweise die Aktivierung einer Zentralfunktion über zwei unterschiedliche, in verschiedenen Räumen angeordnete Schalter aktivierbar ist. Dabei ist das Schaltsignal beider Schalter identisch, so daß sich auch hier keinerlei Programmieraufwand für den Installateur ergibt, sondern lediglich eine korrekte Verdrahtung für die Funktionsfähigkeit des Installationssystems notwendig ist.

Gemäß Anspruch 4 kann vorgesehen sein, daß zur Schaltung der Zentralfunktionen und der Standardfunktionen sowohl Zentraleingänge als auch Standardeingänge mit Signalerkennungsschaltung vorgesehen sind. Das heißt gemäß Anspruch 4 ist eine Kombination der Ausgestaltungen gemäß Anspruch 2 und 3 vorgesehen. Einerseits sind hier folglich Zentraleingänge vorgesehen, bei deren Aktivierung durch die Recheneinheit zwangsläufig die entsprechend fest zugeordneten Zentralfunktionen aktiviert werden. Zusätzlich zu dieser Aktivierung kann eine solche Zentralfunktion gemäß der Ausgestaltung nach Anspruch 4 auch über einen mit einer Signalerkennungsschaltung versehenen Standardeingang erfolgen, so daß die gleiche Schaltfunktion über mehrere Eingänge erfolgen kann und somit in einfachster Weise auch in unterschiedlichen Räumen angeordnete Schalter zur Aktivierung derselben Zentralfunktion vorgesehen werden können. Insbesondere ist durch diese Ausgestaltung auch eine nachträgliche Einrichtung eines weiteren Schalters in einem anderen Raum möglich, ohne daß eine zusätzliche Leitung zur Recheneinheit gelegt werden muß.

Gemäß Anspruch 5 ist vorgesehen, daß die Auswahl einer Zentralfunktion durch einen Wahlschalter erfolgt, der aus einer neutralen Automatikstellung in eine mit der jeweiligen Zentralfunktion gekennzeichneten Stellung bringbar ist und, daß den Ausgängen jeweils ein Taster zugeordnet ist, durch dessen Betätigung der jeweils zugehörige Ausgang der gewählten Zentralfunktion zuordenbar ist. Durch diese Ausgestaltung wird insbesondere die variable Zuordnung von Ausgängen zu Zentralfunktionen erheblich vereinfacht.

Nach der Zuordnung aller gewünschten Ausgänge durch Betätigen der entsprechend zugeordneten Taster wird der Wahlschalter in seine neutrale Automatikstellung zurückgestellt und die getroffene Auswahl der Ausgänge für die gewählte Zentralfunktion in der Recheneinheit gespeichert. Diese nun gewählte Zuordnung der Ausgänge wird nun aktiviert, wenn entweder am entsprechenden Zentraleingang das entsprechende Aktivierungssignal vorliegt oder wenn an einem Standardeingang ein für diese Aktivierung vorgesehenes Schaltsignal vorliegt und der Standardeingang über seine Signalerkennung ein solches Schaltsignal an die Recheneinheit übergibt. Es ist erkennbar, daß insbesondere durch die Ausgestaltung gemäß Anspruch 5 bei korrekter Verdrahtung des Installationssystems die Auswahl der entsprechenden Ausgänge für die Zuordnung der gewünschten Zentralfunktion oder Zentralfunktionen in äußerst einfacher Weise durchführbar ist, ohne daß der Installateur über irgendwelche Programmierkenntnisse oder dergleichen verfügen muß.

Gemäß Anspruch 6 können jeder Funktionsgruppe zur Schaltung einer Standardfunktion verschiedene Schaltungsarten zugeordnet werden. Hierzu ist ein Funktionsschalter vorgesehen, durch welchen die Schaltungsart eines Standardsignals einstellbar ist. Hierbei sind erfindungsgemäß zwei Schaltungsarten vorgesehen, nämlich eine einfache Schaltfunktion oder eine Tastfunktion, wobei in einem Fall ein entsprechendes Schaltsignal am Standardeingang permanent anliegt, solange der Schalter eingeschaltet ist und im zweiten Fall nur ein kurzzeitiges Tastsignal, welches einen Schaltvorgang bewirkt. D.h. bei der Funktionsart "Schaltsignal" wird der Eingang mittels eines ganz normalen, in einem Raum befindlichen Lichtschalters geschaltet. Ist der Standardeingang auf die Schaltungsart "Tastsignal" geschaltet, so kann ein Schaltsignal ausschließlich über einen in einem Raum befindlichen Taster aktiviert werden.

Weiter kann gemäß Anspruch 7 vorgesehen sein, daß wenigstens eine Funktionsgruppe zur Schaltung einer Standardfunktion eine Zeitschaltfunktion aufweist. Diese Zeitschaltfunktion wird erfindungsgemäß vorzugsweise durch ein "Tastsignal" geschaltet. Dies bedeutet, daß, ähnlich wie bei einem Zeitschaltrelais oder einem Treppenautomaten, bei einem anliegenden Tastsignal die Zeitfunktion gestartet wird. Eine solche Zeitfunktion ist beispielsweise, wie heute im Stand der Technik bekannt, bei Treppenlichtautomaten üblich, so daß das Installationssystem durch diese einfache, integrierte Zeitschaltfunktion einen solchen Treppenlichtschalter ersetzt. Dabei können auch mehrere Standardeingänge mit einer solchen Zeitschaltfunktion versehen sein.

Gemäß Anspruch 8 kann vorgesehen sein, daß die Zeitschaltfunktion mittels eines Funktionsschalters anwählbar ist und, daß mittels dieses Funktionsschalters wahlweise auch die Schaltungsart eines Standardsignals wahlweise auf den Wert "Schaltsignal" oder "Tastsignal" einstellbar ist und, daß über diesen Funktionsschalter die Schaltzeit einstellbar ist.

Dies bedeutet insbesondere für die Zeitschaltfunktion, daß die gewünschte Schaltzeit in gewissen vorgegebenen Grenzen, in gleicher Weise wie bei den bereits bekannten Treppenlichtautomaten einstellbar ist. Dabei kann ebenfalls vorgesehen sein, daß vor Ablauf der eingestellten Zeit die Einschaltzeit durch erneuten Tastendruck von neuem gestartet wird. Als Zeitschaltfunktion ist auch vorgesehen, daß kurz vor Ablauf der eingestellten Schaltzeit eine Abschaltvorwarnung aktiviert wird. Diese Abschaltvorwarnung kann dabei so ausgelegt sein, daß die geschaltete Lichtquelle kurz vor Ablauf der Einschaltzeit mit einem kurzen Doppelblinken reagiert. Die Abschaltvorwarnung kann dabei insgesamt 40 Sekunden betragen und auch nach Ablauf der eingestellten Schaltzeit beginnen. Dieses Doppelblinken wird von der Recheneinheit durch zweimaliges Ausschalten des Kanals für 40 Millisekunden im Abstand von etwa 200 Millisekunden bewirkt. Dieses Doppelblinken wiederholt sich nach etwa 10 Sekunden und nach weiteren 30 Sekunden wird der Kanal von der Recheneinheit abgeschaltet. Während einer solchen Abschaltvorwarnung ist stets eine "Nachtastung" möglich, so daß die Einschaltzeit um die entsprechende Schaltzeit verlängerbar ist.

Gemäß Anspruch 9 sind die eingestellten oder programmierten Funktionen und Zuordnungen der Ein- und Ausgänge mittels optischer Anzeigeelemente anzeigbar. Solche Anzeigeelemente können zum Beispiel LED's sein, welche bei entsprechender Aktivierung aufleuchten. Durch diese Ausgestaltung ist die vorgenommene Einstellung des Installationssystems in einfachster Weise überprüfbar.

Gemäß Anspruch 10 ist vorgesehen, daß als Schaltsignal zur Aktivierung der Funktionsgruppen die Phase der Netzspannung verwendet wird. Dies bedeutet, daß eine Fehlbelegung der Eingänge kaum möglich ist, da der Installateur für die Anschlüsse der Eingänge den normalen Leitungsdraht des entsprechenden Schalters im entsprechenden Wohnraum verwendet, wie er dies beispielsweise schon bei der Installation eines Treppenlichtautomaten oder dergleichen kennt.

Weiter kann gemäß Anspruch 11 vorgesehen sein, daß als Schaltsignal zum aktivieren einer Zentralfunktion über einen Standardeingang die obere, untere Netzhalbwelle oder die volle Sinuswelle der Netzspannung verwendet wird und, daß der entsprechende Standardeingang zur Signalerkennung eine Halbwellenerkennungsschaltung aufweist. Durch diese erfindungsgemäße Ausgestaltung wird eine äußerst einfache Schaltung realisiert, welche keinerlei Programmierung des Schalters benötigt. Ist eine solche "Signalmodulation" vorgesehen, so ist es lediglich notwendig an einem bestehenden Schalter eine kleine Diodenschaltung zu installieren, durch welchen entweder die obere oder die untere Halbwelle als Schaltsignal generiert wird. Durch die Ausgestaltung ist eine Ansteuerung eines Standardeinganges für eine Zentralfunktion in einfachster Weise durchführbar, ohne daß eine spezielle Programmierung insbesondere des Schalters oder dessen Anmeldung an die Recheneinheit erforderlich ist. Weiter kann eine solche Schaltungsart zusätzlich zu den normalen Zentraleingängen vorgesehen sein, so daß zur Aktivierung einer Zentralfunktion zusätzlich zum zugehörigen Zentraleingang auch noch ein oder mehrere Standardeingänge verwendet werden können. Dies ist insbesondere dann von Vorteil, wenn mehrere Schalter, auch nachträglich, in unterschiedlichen Räumen für die Aktivierung einer Zentralfunktion vorgesehen und keine weiteren Steuerleitungen verlegt werden sollen.

Gemäß Anspruch 12 kann vorgesehen sein, daß der Ausgang jeder einzelnen Funktionsgruppe mit zwei Anschlüssen versehen ist, von welchen einer an der Phase der Netzversorgung unabhängig von der Steuerphase des zugehörigen Eingangs angeschlossen ist und, daß der zweite Anschluß des Ausgangs zum jeweils anzusteuernden Verbraucher führt und, daß bei Aktivierung des Ausgangs die Phase zum Verbraucher durchgeschaltet ist. Dies bedeutet, daß auch hier eine äußerst einfache Verdrahtung zum Verbraucher vorliegt, wobei der schaltbare Ausgang der Recheneinheit systemtechnisch nach Art eines normalen Schaltrelais funktioniert und somit auch keinerlei Spezialkenntnisse des Installateurs für die Verdrahtung vorliegen müssen. Weiter hat diese Ausgestaltung den Vorteil, daß die Eingänge unabhängig vom Ausgang beliebig mit einer der drei Phasen der Netzspannung geschaltet werden können und nicht zwingend mit der gleichen Phase des Schaltsignals angesteuert werden müssen. Auch hierdurch werden Fehlverdrahtungen sicher vermieden.

Gemäß Anspruch 13 kann vorgesehen sein, daß die Recheneinheit mit einer Schnittstelle versehen ist, über welche eine externe Programmierung der Schaltfunktionen der Funktionsgruppen durchführbar ist und, daß über diese Schnittstelle eine gewünschte Zuordnung der Eingänge, Ausgänge und Funktionsgruppen voreinstellbar ist. Durch diese Ausgestaltung sind jedem Schaltmodul der erfindungsgemäßen Art des erfindungsgemäßen Installationssystems bestimmte Funktionsgruppen, die zugehörigen Eingänge und auch die zugehörigen Ausgänge vorprogrammierbar. Die Zuordnung der Ausgänge kann anschließend auch noch vor Ort gemäß Anspruch 5 vorgenommen bzw. geändert werden. Mit dieser Ausgestaltung wird dem Installateur einerseits ein Schaltmodul zur Verfügung gestellt, welches die wichtigsten Funktionsgruppen, insbesondere bezüglich der Zentralfunktionen Zentral-EIN, Zentral-AUS und Anwesenheitssimulation oder auch noch weitere Zentralfunktionen enthält. Sollte der Installateur bzw. der Kunde andere Zentralfunktionen bevorzugen, so kann dies einerseits werkseitig oder auch nachträglich über die vorhandene Schnittstelle berücksichtigt werden. Dabei ist vorgesehen, daß diese weiteren Funktionsgruppen über einen PC und der Schnittstelle an das Schaltmodul bzw. dessen Recheneinheit durch einfache Auswahl übergebbar sind. Es erfordert auch hier keinerlei Programmierkenntnisse oder dergleichen.

Gemäß Anspruch 14 kann vorgesehen sein, daß mehrere mit einer oder mehreren Schaltfunktionen versehene Schaltmodule vorgesehen sind, und daß jedes der Schaltmodule eine Kommunikationsschnittstelle aufweist, über welche die Schaltmodule über eine Zweidrahtverbindung parallel miteinander verbunden sind und untereinander kommunizieren. Diese erfindungsgemäße Ausgestaltung beinhaltet einen modularen Aufbau des Gesamtsystems, so daß dieses beliebig, je nach den Anforderungen, erweiterbar ist.

Hierzu kann gemäß Anspruch 15 vorgesehen sein, daß ein Schaltmodul als Mastermodul mit einer Hauptrecheneinheit ausgebildet ist und mit den Zentralfunktionen versehen ist und, daß die weiteren Schaltmodule als Slavemodule mit unterschiedlichen Schaltfunktionen ausgebildet und jeweils mit einem Mikroprozessor versehen sind und, daß die Zentralfunktionen des Mastermoduls über die Kommunikationsschnittstellen den Ausgängen der Slavemodule über Tastschalter der Slavemodule zuordenbar sind. Für diese Ausgestaltung ist jede beliebige modulare Erweiterung des Gesamtsystems durchführbar. Auch können, sollte sich nachträglich herausstellen, daß diverse Schaltmodule nicht benötigt werden, oder nicht mehr benötigt werden diese wieder entfernt werden. Hierzu ist lediglich notwendig die Zweidrahtverbindung zu lösen. Äußerst vorteilhaft ist hier, daß die Zentralfunktionen in Art und Weise der Ausgestaltung gemäß Anspruch 5 durch entsprechende Taster auch den Slavemodulen zuordenbar sind, so daß auch nachträglich installierte Beleuchtungseinrichtungen oder dergleichen über die Slavemodule den zentralen Schaltfunktionen zuordenbar sind. Auch diese erfindungsgemäße Ausgestaltung erfordert keinerlei Spezialkenntnisse des Installateurs, sondern lediglich eine ganz normale herkömmliche Verdrahtung der zusätzlich installierten Slavemodule, ohne daß eine Umprogrammierung über einen Laptop oder dergleichen erforderlich ist. Die Schaltmodule, die hier zum Einsatz kommen, können dabei Standardfunktionen wie beispielsweise Dimmerfunktionen, eine Rolladensteuerung, eine Netzfreischaltung, Sensorfunktionen, Schaltuhren, Bewegungsmelder, Temperaturregeler oder auch AF-Sender- oder Empfängerfunktionen sowie eine Telefon-Schnittstelle und noch weitere Funktionen enthalten. Die genannten Funktionen sind hier lediglich beispielhaft aufgeführt und nicht als Beschränkung zu verstehen.

Gemäß Anspruch 16 kann vorgesehen sein, daß jedes Schaltmodul mit eigenen Eingängen und Ausgängen versehen ist und bei Unterbrechung des Kommunikationsflusses über die Kommunikationsschnittstelle als eigenständiges Schaltmodul funktioniert und seinen eigenen Standardschaltfunktionen weiterhin bei Anliegen eines entsprechenden Schaltsignals am eigenen Eingang ausführt. Durch diese erfindungsgemäße Ausgestaltung wird vorteilhaft erreicht, daß bei Störung eines der Schaltmodule oder auch des Mastermoduls die anderen Schaltmodule weiterhin zumindest ihre Standardfunktionen ausführen können. Selbst bei Störungen über die Kommunikationsschnittstelle sind diese Funktionen stets gewährleistet. Ist ein Slavemodul beispielsweise als ganz normales Schaltmodul zum Schalten einer Lichtquelle ausgelegt, so bleibt diese Schaltfunktion weiterhin erhalten, auch dann, wenn beispielsweise das Mastermodul ausfällt. Eine solche Ausgestaltung ist beispielsweise bei den Eingangs genannten Bussystemen nicht gewährleistet. Fällt dort im System ein Baustein aus, so ist das gesamte System nicht mehr funktionsfähig.

Gemäß Anspruch 17 kann weiterhin vorgesehen sein, daß jedes der Schaltmodule mit einer eindeutigen Geräteadresse ausgestattet ist, und daß die Geräteadresse aus der Kalenderwoche und dem Jahr der Herstellung des Schaltmoduls in Kombination mit einer 5-stelligen Durchlaufnummer besteht. Mit dieser Ausgestaltung ist eine eindeutige Zuordnung, insbesondere der Zentralfunktionen zu den Ausgängen jedes zugeschalteten Schaltmoduls durchführbar. Diese eindeutigen Geräteadressen werden dem Mastermodul über die Kommunikationsschnittstellen nach der Installation des jeweiligen Schaltmoduls bzw. Inbetriebnahme des Systems oder auch nach der zusätzlichen, ergänzenden Installation eines Slavemoduls übergeben und dort abgespeichert. So ist das Mastermodul stets in der Lage Zentralfunktionen auch dem entsprechenden Ausgang eines Slavemoduls eindeutig zuzuordnen. Durch die automatische "Anmeldung" eines Slavemoduls am Mastermodul ist auch hier keine Programmierung notwendig, um ein zusätzlich installiertes Slavemodul in Betrieb nehmen zu können. Auch ein Entfernen eines Slavemoduls kann problemlos erfolgen, da das Mastermodul ständig die gespeicherten Geräteadressen über die Kommunikationsschnittstellen prüft und eine Geräteadresse aus seinem Speicher löscht, sofern vom entsprechenden Slavemodul keine Rückmeldung mehr vorliegt.

Gemäß Anspruch 18 kann vorgesehen sein, daß den Zentralfunktionen eine höhere Priorität zugewiesen ist, als den Standardfunktionen, so daß bei Aktivierung einer Zentralfunktion diese stets ausgeführt wird, unabhängig davon, ob eine Standardfunktion aktiviert ist. Durch diese Ausgestaltung ist sichergestellt, daß keine Bedienungsfehler auftreten können. Eine Standardfunktion bewirkt beispielsweise das Einschalten der Beleuchtung in einem Raum durch eine Schalterbetätigung über den zugehörigen Standardeingang eines Schaltmoduls. Wird an anderer Stelle eine Zentralfunktion wie beispielsweise Zentral-Ein, Zentral-Aus oder auch eine Anwesenheitssimulation geschaltet, so verliert die Aktivierung dieses Standardeinganges für die Zeit der Aktivierung der Zentralfunktion seine Funktion. Wird die Zentralfunktion wieder abgeschaltet, so wird, je nach Konfiguration, die Standardfunktion wiederum aktiviert. Ausnahme ist hier die Standardfunktion Zentral-AUS; wird diese deaktiviert, so muß für die Aktivierung des Standardeinganges zum Einschalten einer Lichtquelle dieser zunächst durch einen entsprechenden Schalter im Raum deaktiviert und neu aktiviert werden, um die Beleuchtungseinrichtung erneut einzuschalten.

Gemäß Anspruch 19 kann des weiteres vorgesehen sein, daß den Zentralfunktionen untereinander unterschiedliche Prioritäten zugeordnet sind und, daß manuell schaltbare Zentralfunktionen Vorrang vor automatisch ablaufenden Zentralfunktionen haben. Dies ist dahingehend zu verstehen, daß beispielsweise die Zentralfunktion Zentral-EIN stets Vorrang vor der Zentralfunktion Zentral-AUS hat. Weil die Zentral-EIN-Funktion erfahrungsgemäß im Sinne einer Panikbeleuchtung fungiert, sollte diese auch Vorrang vor der Zentralfunktion Zentral-AUS haben. Die Zentral-AUS-Funktion wird in der Regel abends aktiviert, um sicherzustellen, daß nicht vergessen wurde beispielsweise sämtliche Beleuchtungseinrichtungen eines Gebäudes abzuschalten. Wird des Nachts beispielsweise nun ein Einbruch vermutet, so soll nun im kompletten Gebäude das Licht eingeschaltet werden. Dazu ist es notwendig, daß die aktivierte Zentralfunktion Zentral-AUS durch die Zentralfunktion Zentral-EIN überlagert wird und tatsächlich im Gebäude sämtliche Beleuchtungseinrichtungen eingeschaltet werden. In gleicher Weise können auch die beiden Zentralfunktionen Zentral-EIN und Zentral-AUS vorrangig zur Anwesenheitssimulation sein.

Gemäß Anspruch 20 ist vorgesehen, wie bereits oben beispielhaft erwähnt, daß als Zentralfunktion eine Anwesenheitssimulation vorgesehen ist und, daß die Schaltfunktionen der Anwesenheitssimulationen innerhalb einer Woche anhand der manuellen Schaltvorgänge in einer Gebäudeinstallation aufgezeichnet und in einem Speicher der Recheneinheit bzw. Hauptrecheneinheit aufgezeichnet werden und bei aktivierter Anwesenheitssimulation anhand der aufgezeichneten Schaltzeiten automatisch ablaufen. Durch diese spezielle Ausgestaltung der Anwesenheitssimulation, insbesondere durch die Aufzeichnung der Schaltvorgänge innerhalb einer Woche, wird auch eine realistische Anwesenheitssimulation erreicht.

Gemäß Anspruch 21 kann vorgesehen sein, das die Schaltzeiten beim Anlauf der Anwesenheitssimulation für jeden wöchentlichen Durchlauf nach einem Zufallsprogramm in vorbestimmbaren zeitlichen Grenzen veränderbar sind. Durch diese automatische Veränderung der Schaltzeiten in gewissen Grenzen werden die täglichen, aufgezeichneten Schaltzeiten verändert, so daß ein Beobachter tatsächlich eine Anwesenheit von Personen vermutet und nicht anhand der stets identischen Schaltzeiten vermutet, daß hier eine Anwesenheitssimulation abläuft.

Anhand der Zeichnung wird nachfolgend die Erfindung näher erläutert. Es zeigt:
- Fig. 1: ein Blockschaltbild eines als Mastermodul ausgebildeten Schaltmoduls des erfindungsgemäßen Installationssystems;
- Fig. 2: die Frontansicht des Mastermoduls aus Fig.1 mit seinen Anschlüssen und Wahlschaltern;
- Fig. 3: eine Schaltungsanordnung des Mastermoduls aus Fig. 1 und 2 mit angeschlossenen Verbrauchern und Schaltern;
- Fig. 4: ein Blockschaltbild eines Schalters mit einer Schaltererweiterung;
- Fig. 5: eine Schalterkombination mit unterschiedlichen Schaltfunktionen und unterschiedlichen Erweiterungsmodulen;
- Fig. 6: eine Prinzipdarstellung von mehreren miteinander kombinierten Schaltmodulen;
- Fig. 7: die Frontansicht von mehreren miteinander kombinierten Schaltmodulen;
- Fig. 8: ein Schaltungsbeispiel dreier Module, deren COM-Schnittstelle an einen gemeinsamen Widerstand des Mastermoduls führen;
- Fig. 9: eine interne Belegliste des Masters.

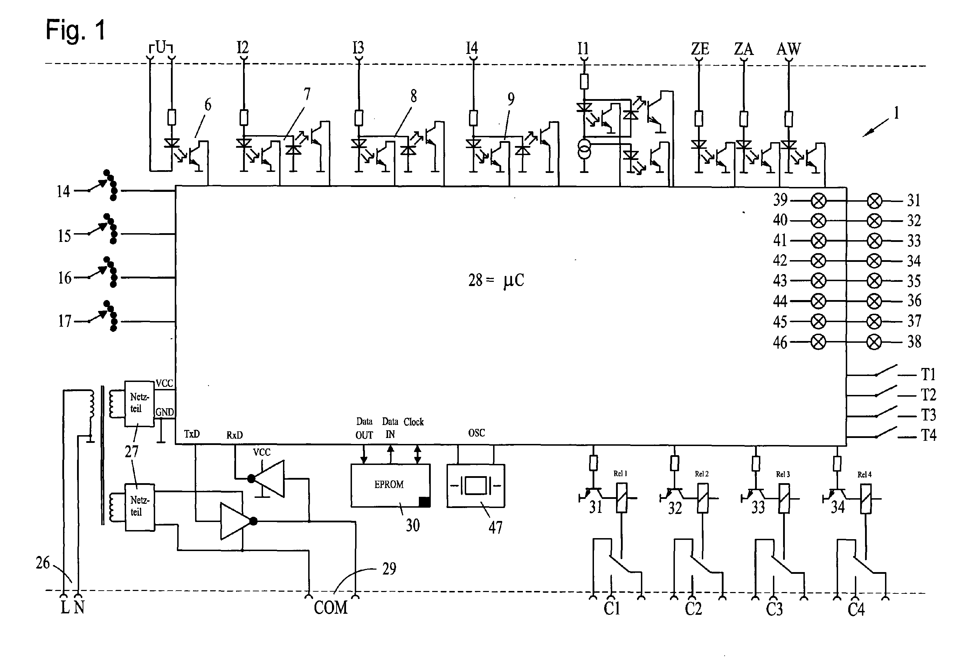

Figur 1 zeigt beispielhaft ein Mastermodul 1 des erfindungsgemäßen Installationssystems, welches auch als "stand alone"-Gerät einsetzbar ist. Dieses Mastermodul 1 stellt im Einzelbetrieb ein fertiges Installationssystem dar und weist vier Standardeingänge I1, I2, I3 und I4 auf, welche als potentialfreie Eingänge ausgebildet sind. Beim vorliegenden Ausführungsbeispiel sind diese potentialfreien Eingänge I1 bis I4 mit einer im Detail nicht näher dargestellten Halbwellenerkennungsschaltung 6, 7, 8 und 9 versehen, auf deren Bedeutung später noch näher eingegangen wird. Diese Standardeingänge I1 bis I4 dienen zunächst zur Schaltung eines Verbrauchers und sind dementsprechend standardmäßig jeweils einem Ausgang C1, C2, C3 und C4 zugeordnet. Weiterhin sind bei vorliegendem Ausführungsbeispiel drei Zentraleingänge ZE, ZA und AW vorgesehen, wobei der Zentraleingang ZE für die Zentralfunktion "Zentral-EIN", der Zentraleingang ZA für die Zentralfunktion "Zentral-AUS" und der Zentraleingang AW für die Zentralfunktion "Anwesenheitssimulation" vorgesehen ist. Die Zuordnung dieser Zentraleingänge ZE, ZA, AW zu den Ausgängen C1 bis C4 ist frei wählbar, wie später noch erläutert wird.

Den einzelnen Standardeingängen I1 bis I4 sind beim vorliegenden Ausführungsbeispiel entsprechende Funktionsschalter 14, 15, 16 und 17 zugeordnet, über welchen bestimmte Schaltfunktionen bei anliegendem Schaltsignal am entsprechenden Standardeingang I1 bis I4 vorwählbar bzw. einstellbar ist. Durch entsprechende Einstellung dieser Funktionsschalter 14 bis 17 ist einerseits die Art des am zugehörigen Standardeingang I1 bis I4 anliegenden Schaltsignals in Form eines dauernden Schalt- oder kurzzeitigen Tastsignals einstellbar und andererseits eine Zeitschaltfunktion, wie diese beispielsweise bei herkömmlichen Treppenlichtautomaten ebenfalls eingesetzt wird. In Abhängigkeit der Stellung der Funktionsschalter 14, 15, 16 und 17 wird am entsprechenden Standardeingang I1, I2, I3 und I4 entweder ein Schaltsignal oder ein Tastsignal erwartet. Ist der Funktionsschalter 14 oder 15 zusätzlich mit einer Zeitschaltfunktion belegt, so kann diese unter Einstellung einer vorbestimmbaren Zeitdauer eingestellt werden, wodurch bewirkt wird, daß der standardmäßig zugehörige bzw. zugeordnete Ausgang C1 bzw. C2 über diese Zeitfunktion ansteuerbar ist, was später noch näher erläutert wird.

Desweiteren ist jedem Ausgang C1 bis C4 jeweils ein Taster T1, T2, T3 bzw. T4 zugeordnet, durch welchen eine Zuordnung der zugehörigen Ausgänge C1 bis C4 zu einer Zentralfunktion ZE, ZA oder AW festlegbar ist.

Weiter ist noch ein Netzanschluß 26 vorgesehen, welcher über die normale Netzspannung L und N gespeist wird. Über ein Netzteil 27 wird einerseits eine als Mikroprozessor 28 ausgebildete Recheneinheit und andererseits eine Kommunikationsschnittstelle 29, nachfolgend mit COM bezeichnet, gespeist. Weiter ist diese COM 29 bzw. die Recheneinheit 28 mit einem Datenspeicher 30 in Form eines EPROMs versehen, in welchem diverse programmierbare Voreinstellungen ablegbar sind. Insbesondere dient dieser EPROM 30 zur Festlegung sowohl der Standardfunktionen als auch der Zentralfunktionen.

Wie weiter aus Figur 1 ersichtlich ist, fungieren die Ausgänge C1 bis C4 im Sinne einer Relaisschaltung, was durch entsprechende Schalttransistoren 31, 32, 33 und 34 in Figur 1 dargestellt ist.

Weiter sind noch diverse Kontrolleuchten 35, 36, 37, 38, 39, 40, 41 und 42 vorgesehen, welche zur optischen Kontrolle bzw. Einstellung gewisser Betriebszustände dienen.

Diese Kontrolleuchten 35 bis 42 sind einerseits den Standardeingängen I1 bis I4 und andererseits den Ausgängen C1 bis C4 zugeordnet. Desweiteren sind weitere drei Kontrolleuchten 43, 44 und 45 vorgesehen, welche zur Einstellung der vorprogrammierten Zentralfunktionen dienen. Eine weitere Kontrolleuchte 46 dient zur Anzeige des Programmierbetriebes, während der Vorprogrammierung der als Mikroprozessor ausgebildeten Recheneinheit 28. Um desweiteren diverse Zeitschaltfunktionen realisieren zu können, ist ein Taktgeber 47 vorgesehen.

Die Standardeingänge I1 bis I4 wie auch die Zentraleingänge ZE, ZA und AW sind für Schaltsignale ausgelegt, die aus der Phase der normalen Netzversorgung abgeleitet sind. Das heißt, daß diese Eingänge I1 bis I4 sowie ZE, ZA und AW auf eine Betriebsspannung von 230 V als Spannungssignal ausgelegt sind. Desgleichen gilt auch für die Ausgänge C1 bis C4, beim welchen einer der Anschlüsse mit der Phase der normale Netzspannung verbunden ist und der andere Anschluß zum entsprechenden Verbraucher führt, wie dies weiter unten noch näher erläutert wird.

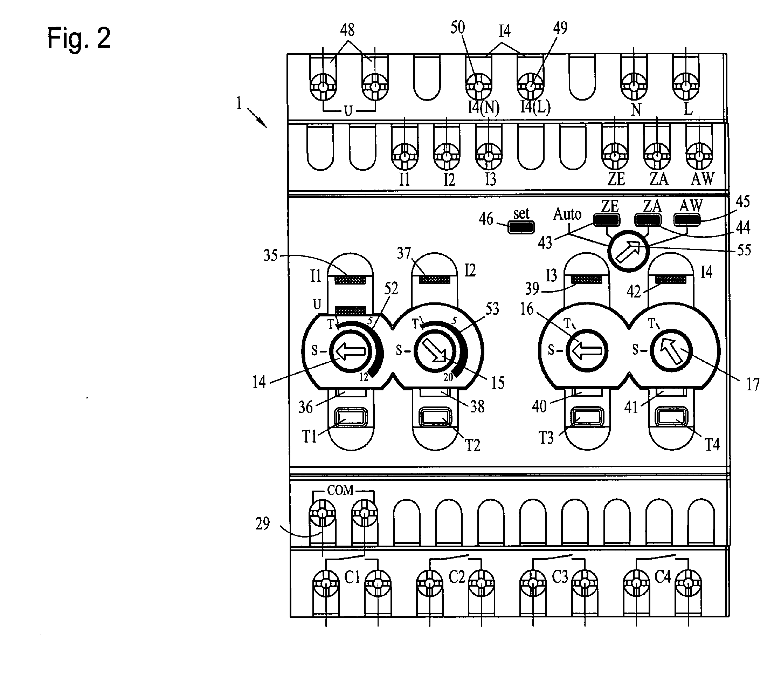

Figur 2 zeigt ein Ausführungsbeispiel eines konkreten Mastermoduls 1, welches die im Blockschaltbild gemäß Figur 1 dargestellte Schaltungsanordnung enthält. Es ist erkennbar, daß sämtliche Anschlüsse, d.h. sowohl die Eingänge I1 bis I4, ZE, ZA und AW als auch die Ausgänge C1 bis C4 wie auch die Kommunikationsschnittstelle 29 (COM) als Klemmanschlüsse ausgebildet sind, wie dies beispielsweise beim normalen, herkömmlichen Schaltautomaten üblich ist. Zu diesen Anschlüssen der Eingänge und Ausgänge ist zusätzlich noch ein potentialfreier Universaleingang 48 vorgesehen, welcher zur Kopplung des Mastermoduls beispielsweise mit einer Wechselsprechanlage vorgesehen ist. Dieser potentialfrei Universaleingang 48 ist ebenfalls in Figur 1 im Blockschaltbild dargestellt.

Die Standardeingänge I1 bis I3 sind ebenfalls als potentialfrei Eingänge ausgebildet und über den Netzanschluß N gegen "Masse" geschaltet. Der Standardeingang I4 weist insofern eine Besonderheit auf, als er mit einer Eingangsklemme 49 versehen ist, welche als Anschluß für ein 230 V Schaltsignal dient. Dieser Standardeingang I4 weist eine zweite Anschlußklemme 50 auf, über welchen dieser Standardeingang I4 separat auf Nullpotential schaltbar ist. Diese spezielle Ausgestaltung gestattet es, diesen Eingang I4 über einen Stromschutzschalter, einen sogenannten FI-Schalter zu betreiben, wobei in diesem Fall die Anschlußklemme 50 über den FI-Schalter auf Nullpotential geführt wird. Eine solche Ausgestaltung kann notwendig sein, um die gesetzlichen Vorschriften bezüglich der Absicherung gewisser Stromkreise zum Beispiel in Verbindung mit Naßzellen erfüllen zu können.

Desweiteren ist in Figur 2 erkennbar, daß die Funktionsschalter 14 bis 17 als Drehschalter ausgebildet sind. Diese Funktionsschalter 14 bis 17 können wahlweise in eine Stellung "S" oder "T" gebracht werden. Sind diese Funktionsschalter 14 bis 17 auf die Funktionsstellung "S" eingestellt, wie beispielhaft für die Funktionsschalter 14 und 16 dargestellt, so wird am entsprechend zugehörigen Eingang I1 bzw. I3 als Schaltsignal eine andauernde Schaltspannung von 230 V erwartet, wie dies beispielsweise beim Einschalten eines Beleuchtungskörpers herkömmlicher Art über einen normalen Lichtschalter im entsprechenden Wohnraum erfolgt. Ist ein solcher Funktionsschalter in der Stellung "T", wie dies für den Funktionsschalter 17 dargestellt ist, so wird am zugehörigen Eingang I4 als Schaltsignal ein Tastsignal erwartet, wie dies beispielsweise bei einer Treppenlichtschaltung der Fall ist.

Zusätzlich zu diesen beiden Schaltfunktionen "S" und "T" sind die beiden Funktionsschalter 14 und 15 und die zugehörige Elektronik noch mit einer Zeitschaltfunktion versehen. Die entsprechende Funktionsschalter 14, 15 können dabei über die Stellung "T" hinaus in einen Zeitschaltmodus eingestellt werden, wie dies beispielhaft für den Funktionsschalter 15 dargestellt ist. Befindet sich einer dieser Funktionsschalter 14 oder 15 im Bereich der zugehörigen Zeitskala 52 bzw. 53, so wird am zugehörigen Eingang I1 bzw. I2 ein Tastsignal erwartet. Bei anliegendem Tastsignal wird der zugehörige Ausgang C1 bzw. C2 für den auf der Skala eingestellten Zeitraum, 1 bis 12 Minuten bzw. 1 bis 20 Minuten, durchgeschaltet. Diese Schaltfunktion entspricht dabei im wesentlichen den bisher bekannten Schaltfunktionen von Treppenlichtautomaten und dergleichen.

Weiter sind in Figur 2 noch die Zentraleingänge ZE, ZA und AW erkennbar, welchen beim vorliegenden Ausführungsbeispiel vorprogrammierbare Zentralfunktionen, wie bereits oben erwähnt, Zentral-EIN, Zentral-AUS oder eine Anwesenheitssimulation zugeordnet sind. Weiter sind in Figur 2 auch die den Ausgängen C1 bis C4 entsprechend zugeordneten Taster T1 bis T4 erkennbar, durch deren Betätigung wahlweise eine Durchschaltung der Zentralfunktionen ZE, ZA oder AW auf den zugehörigen Ausgang C1, C2, C3 oder C4 bewirkbar ist.

Es ist erkennbar, daß oberhalb der Funktionsschalter 16 und 17 ein weiterer ebenfalls als Drehschalter ausgebildeter Wahlschalter 55 vorgesehen ist. Dieser Wahlschalter 55 ist aus einer Stellung "Auto" in die den Zentralfunktionen entsprechenden Stellungen "ZE", "ZA" und "AW" bringbar. Diese Schalterstellungen sind mit den Kontrolleuchten 43, 44 und 45 gekennzeichnet, wobei die jeweilige Kontrolleuchte aufleuchtet, sofern der Wahlschalter in diese Stellung gebracht wird. Bei der vorliegenden Darstellung gemäß Figur 2 steht der Wahlschalter 55 in der Stellung "ZA". In dieser Stellung ist eine Art Programmierung der Ausgänge C1, C2, C3 und C4 durchführbar in dem Sinne, daß diese Ausgänge C1 bis C4 wahlweise durch betätigen einer ihrer zugeordneter Taster T1, T2, T3 oder T4 zuordenbar sind. Ist die Zuordnung der entsprechend zugehörigen Ausgänge C1 bis C4 durchgeführt, so wird der Wahlschalter 55 in seine neutrale Stellung "Auto" zurückgestellt, so werden die vorab gewählten Ausgänge C1 bis C4 bei Anliegen eines entsprechenden Spannungssignals am Eingang ZA durchgeschaltet. In gleicher Weise erfolgt die Zuordnung der Eingänge ZE und AW durch entsprechende Schalterstellung des Wahlschalters 55 und anschließende wahlweise Betätigung der Taster T1 bis T4. Dabei ist vorgesehen, daß alle Zentralfunktionen ZE, ZA und AW allen oder auch nur einzelnen Ausgängen C1 bis C4 gruppenweise zuordenbar sind. Dies bedeutet, daß beispielsweise der Zentraleingang ZE auf die beiden Ausgänge C1 und C2 aufschaltbar ist. Dabei kann gleichzeitig beispielsweise der Zentraleingang AW den Ausgängen C1, C3 und C4 zugeordnet werden.

Die entsprechende Zuordnung bzw. Aktivierung in der Einstellungsphase wird dem Installateur durch die jeweils zugeordneten Kontrolleuchten 36, 38, 40 und 42 der Ausgänge C1 bis C4 angezeigt, welche eingeschaltet sind, sofern während der "Programmierungsphase" der entsprechende Ausgang C1, C2, C3 oder C4 zugeordnet wurde.

Die Kontrolleuchten 35, 37, 39 und 41 dienen zur Kennzeichnung im Programmiermodus, während die einzelnen Schaltfunktionen der Standardfunktionen programmiert werden.

Die Kontrolleuchte 46 ist mit dem Begriff "set" gekennzeichnet, was bedeutet, daß diese Kontrolleuchte 46 aktiviert ist, wenn sich das Mastermodul 1 im Programmierbetrieb befindet, dieses Mastermodul 1 über eine in Figur 2 nicht separat dargestellte Schnittstelle extern programmiert wird und entsprechende Programm-Informationen empfangen kann.

Weiter ist aus Figur 2 noch erkennbar, daß die mit COM gekennzeichnete Kommunikationsschnittstelle 29 ebenfalls zwei Anschlüsse aufweist, wobei deren Funktionsweise später noch näher erläutert wird.

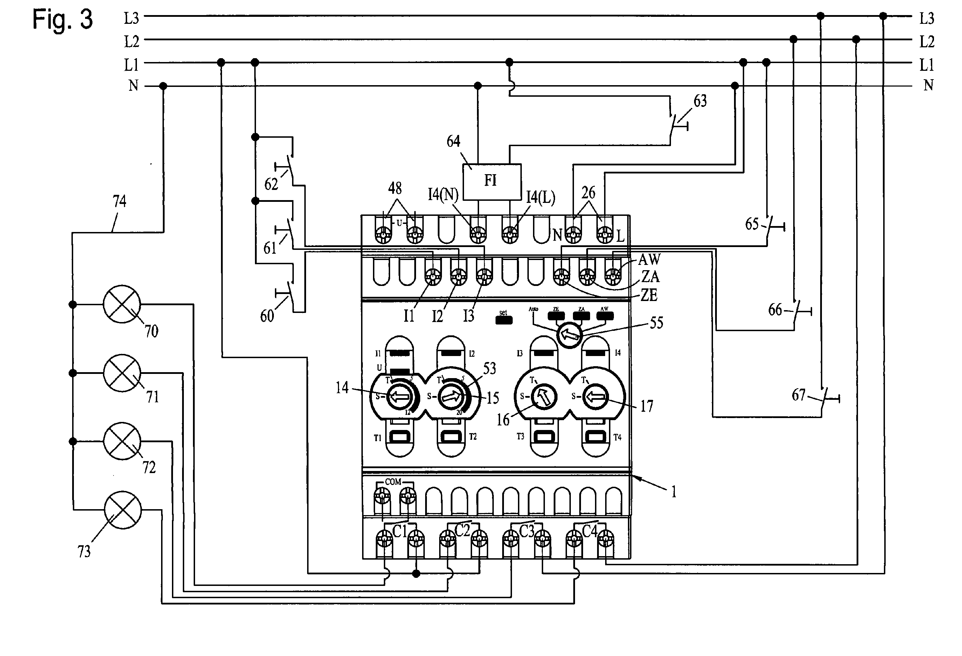

Figur 3 zeigt eine Schaltungsanordnung, in welche das Mastermodul 1 eingebunden ist. Nicht angeschlossen ist bei dieser Darstellung der Universaleingang 48.

Das Mastermodul 1 befindet sich bezüglich des Wahlschalters 55 in seinem normalen Betriebszustand, was bedeutet, daß dieser Wahlschalter 55, wie aus Fig.3 erkennbar, sich in der Betriebsstellung "Auto" befindet. Der Funktionsschalter 14 befindet sich in der Funktionsstellung "S", so daß am zugehörigen Eingang I1 ein herkömmlicher Schalter 60 zur Erzeugung eines permanenten Schaltsignals vorgesehen ist. Der Funktionsschalter 15 ist auf die Skala 53 gerichtet und befindet sich in einer Zeitstellung, die bei Aktivierung der zugehörigen Funktionsgruppe eine Zeitschaltung für eine Dauer von etwa 10 Minuten auslöst. Da sich dieser Funktionsschalter 15 in der Zeitschaltfunktion befindet, ist am zugehörigen Eingang I2 ein Tastschalter 61 angeschlossen.

Der Funktionsschalter 16 befindet sich in der Stellung "T", so daß dessen Funktionsgruppe auf ein Eingangssignal "Tastsignal" eingestellt ist und dementsprechend am zugehörigen Eingang I3 ebenfalls ein Tastschalter 62 angeschlossen ist. Der Schalter 60 sowie die beiden Taster 61 und 62 werden bei deren Aktivierung über die entsprechenden Eingänge I1, I2 und I3 über die Anschlußklemme N des Netzanschlusses 26 gegen den Nulleiter N der in Fig. 3 mit L1, L2, L3 und N gekennzeichneten Netzversorgung einer Hausinstallation geschaltet.

Der Funktionsschalter 17 befindet sich, wie aus Fig. 3 ersichtlich ist, in der Funktionsstellung "S", so daß am entsprechenden Eingang I4 ein normaler Lichtschalter 63 angeschlossen ist. Der Eingang I4 weist beim vorliegenden Ausführungsbeispiel zwei Anschlußklemmen I4(N) und I4(L) auf, so daß für diesen Eingang ein FI-Schalter eingesetzt werden kann. Dabei ist der Schalter 63 über diesen FI-Schalter 64 mit der Anschlußklemme I4(L) verbunden. Die Schaltung gegen Nullpotential N erfolgt ebenfalls über den FI-Schalter 64, welcher einerseits mit der Anschlußklemme I4(N) des Eingangs I4 und anderseits mit dem Nullleiter der Netzversorgung N verbunden ist. Durch die besondere Ausgestaltung des Eingangs I4 ist eine den gesetzlichen Vorschriften entsprechende Schutzschaltung, wie sie beispielsweise für Naßzellen vorgeschrieben ist, durchführbar.

Wie weiter aus Fig. 3 ersichtlich ist, liegen die Schalter 60 und 63 sowie die Taster 61 und 62 mit ihrem zweiten Anschluß an der Phase L1 der Netzversorgung.

Des weiteren ist aus Fig. 3 erkennbar, daß auch die drei Zentraleingänge ZE, ZA und AW mit entsprechenden Eingangsschaltern 65, 66 und 67 mit den Phasen L1, L2 und L3 verbunden sind. Es ist ersichtlich, daß es eingangsseitig unerheblich ist, welche der drei Phasen L1, L2 oder L3 der Netzversorgung zur Erzeugung eines Steuersignals verwendet werden, da es sich bei allen Eingängen um potentialfreie und voneinander unabhängige Eingänge handelt. Desgleichen gilt auch für die oben beschriebenen Eingänge I1 bis I4, welche unabhängig voneinander an unterschiedliche Phasen L1, L2 oder L3 über die entsprechenden Schalter 60, 63 oder Taster 61, 62 anschließbar sind.

Wie aus Fig. 3 weiter ersichtlich ist, sind an sämtlichen Ausgängen C1, C2, C3 und C4 Verbraucher 70, 71, 72 und 73 angeschlossen. Dabei ist ebenfalls aus Fig. 3 ersichtlich, daß die Spannungsversorgung der Ausgänge C1 bis C4 ebenfalls mit unterschiedlichen Phasen L1 bis L3 erfolgen kann. So erfolgt beispielhaft die Spannungsversorgung des Ausganges C4 über die Phase L2, die Spannungsversorgung des Ausganges C3 über die Phase L3, während die beiden Ausgänge C1 und C2 parallel geschaltet von der Phase L1 der Netzversorgung mit der notwendigen Betriebsspannung versorgt werden.

Bei Durchschaltung dieser Spannungsversorgung L1, L2 oder L3 auf die Verbraucher 70, 71, 72 und 73 wird diese über eine gemeinsame Rückleitung 74 gegen Nullpotential N der Netzversorgung geschaltet. Es ist erkennbar, daß auch die Spannungsversorgung der "Lastkreise" über deren Ausgänge C1 bis C4 unabhängig von den an den Eingängen I1 bis I4 bzw. ZE, ZA und AW anliegenden Phasen für die Signalerzeugung ist. Dies hat den großen Vorteil, daß bei der Installation keinerlei Fehler begangen werden können und das Mastermodul 1 sogar von einem Laien in einfachster Weise verdrahtet bzw. angeschlossen werden kann.

Beim vorliegenden Ausführungsbeispiel gemäß der Fig. 3 ist die Funktionsweise derart, daß bei Anliegen eines Schaltsignals bei geschlossenem Schalter 60 am Eingang I1 der Ausgang C1 durchgeschaltet wird, so daß der Verbraucher 70 mit einer entsprechenden Betriebsspannung versorgt wird. Beispielhaft sind die Verbraucher 70, 71, 72 und 73 als Beleuchtungen ausgeführt, so daß bei Anliegen eines Störsignals am Eingang I1 das Licht des Verbrauchers 70 eingeschaltet wird. Beim Verbraucher 71 kann es sich beispielsweise um eine Treppenhausbeleuchtung handeln, welche bei Betätigung des Tasters 61 für, wie bereits oben erwähnt, ca. 10 Minuten aktivierbar ist. Das heißt, daß bei Betätigung des Tasters 61 für 10 Minuten der Ausgang C2 aktiviert wird und die Treppenhausbeleuchtung 71 für 10 Minuten eingeschaltet ist. Nach Ablauf dieser 10 Minuten wird die Treppenhausbeleuchtung 71 wieder abgeschaltet.

Die zum Eingang I3 und zum Ausgang C3 gehörende Funktionsgruppe mit ihrem Funktionsschalter 16 ist auf die Funktion "Tastsignal" eingestellt und funktioniert dementsprechend nach Art eines Stromstoßschalters. Das heißt, wird der Taster 62 betätigt, so wird über den Ausgang C3 das Licht 72 eingeschaltet und bei erneutem Betätigen des Tasters 62 dieses Licht 72 wiederum ausgeschaltet.

Bei der vierten Funktionsgruppe des Einganges I4 und des Ausganges C4 ist eine ganz normale Schalterfunktion über den Funktionsschalter 17 eingestellt. Dies bedeutet, daß bei geschlossenem Schalter 63 am Eingang I4 ein Dauersignal anliegt und während der Dauer dieses Signals, d.h. während der Schalter 63 geschlossen ist, der Ausgang C4 die Versorgungsspannung aus der Phase L3 auf den Verbraucher 73 durchschaltet, so daß beispielsweise in einem Badezimmer solange der Schalter 63 geschlossen ist das Licht eingeschaltet ist. Wird der Schalter 63 wieder geöffnet, so wird auch die Beleuchtungseinrichtung 73 wieder ausgeschaltet. D.h., daß bei der Funktionswahl über die Funktionsschalter 14 bis 17 in der Betriebsstellung "S" ein entsprechender Schalter in diesem Falle 60 oder 63, wie ein herkömmlicher Lichtschalter funktioniert und auch als herkömmlicher Lichtschalter ausgebildet ist, da sämtliche Eingangssignale dem normalen Netz in 230 V-Technik entnommen sind. Die Funktionsstellung "T" wie diese beispielhaft für den Funktionsschalter 16 dargestellt ist, findet häufig dort Anwendung, wo beispielsweise eine Beleuchtungseinrichtung über verschiedene Taster ein- und ausgeschaltet werden soll.

Diese Standardfunktionen "Schaltsignal", "Tastersignal" sind vorprogrammiert. Auch die zugeordneten Eingänge I1 bis I4 und die zugeordneten Ausgänge C1 bis C4 sind diesen Schaltfunktionen durch eine Programmierung des Mastermoduls 1 fest zugeordnet. Bei Bedarf kann diese Zuordnung allerdings geändert werden, so daß mehrere Eingänge I1 bis I4 und/oder mehrere Ausgänge C1 bis C4 einer einzigen Funktionsgruppe I1, I2, I3 oder I4 zuordenbar sind.

Damit ist im Bedarfsfall erreichbar, daß beispielsweise über die beiden Eingänge I1 und I4 die Beleuchtungseinrichtung 71 schaltbar ist. Desgleichen ist vorgesehen, daß durch die Programmierung über beispielsweise den Eingang I2 die beiden Ausgänge C1 und C2 schaltbar sind, so daß bei Aktivierung des Einganges I2 die beiden Beleuchtungseinrichtungen bzw. Verbraucher 70 und 71 gleichzeitig einschaltbar sind.

Als Standardprogrammierung ist allerdings vorgesehen, daß jeder Eingang I1 bis I4 jeweils nur einer Funktionsgruppe und diese wiederum jeweils nur einem Ausgang C1 bis C4 zugeordnet ist.

In weiterer Ausgestaltung ist vorgesehen, daß über die Anschlußklemme ZE (Zentral-EIN) alle Beleuchtungseinrichtungen 70, 71, 72 und 73 schaltbar sind. Die Vorgehensweise zur Zuordnung der Ausgänge C1 bis C4 zur Zentralfunktion "Zentral-EIN" wurde zu Fig. 2 beschrieben.

Wird folglich der Schalter 65, bei welchem es sich um einen Taster handelt, betätigt, so werden der Zentraleingang und dessen Funktionsgruppe aktiviert und beispielsweise alle Ausgänge C1 bis C4 durchgeschaltet, so daß alle Verbraucher 70 bis 73 gleichzeitig eingeschaltet werden. Dabei ist vorgesehen, daß dieser Zentralfunktion ZE die höchste Priorität zukommt, was bedeutet, daß unabhängig von evtl. an den Eingängen I1 bis I4 anliegenden oder nicht anliegenden Signalen bei Aktivierung des Zentraleinganges ZE stets die Verbraucher 70 bis 73 geschaltet werden. Wird der Taster 65 erneut betätigt, so wird die Funktion "Zentral-EIN" wieder abgeschaltet. Ist einer der Verbraucher 70, 71, 72 oder 73 eingeschaltet, da an deren entsprechendem Eingang I1 bis I4 ein Schaltsignal vorliegt, so bleibt der zugehörige Verbraucher eingeschaltet.

Anders verhält es sich mit der Zentralfunktion "Zentral-AUS", welche über den Taster 66 aktivierbar und durch erneutes Betätigen wieder deaktivierbar ist. Die "Zentral-AUS" Funktion bedeutet, daß beispielsweise sämtliche Ausgänge C1 bis C4 bei der ersten Aktivierung des Einganges ZA geöffnet bzw. ausgeschaltet werden. D.h., daß sämtliche Einrichtungen bzw. Verbraucher 70 bis 73 ebenfalls ausgeschaltet sind. Wird durch erneutes Betätigen des Tasters 66 die "Zentral-AUS" Funktion wieder abgeschaltet, so wird ein vorab eingeschalteter Verbraucher 70 bis 73 nicht automatisch wieder eingeschaltet. Dort ist vorgesehen, daß der jeweils zugehörige Schalter 60, 63 oder Taster 61, 62 erneut betätigt werden muß, um den entsprechenden Verbraucher 70 bis 73 wieder einzuschalten. Die Funktion "Zentral-AUS" hat eine geringere Priorität, was bedeutet, daß für den Fall, daß diese Funktion aktiviert ist und anschließend die Zentralfunktion "Zentral-EIN" durch betätigen des Tasters 65 aktiviert wird, alle zugeordneten Ausgänge C1 bis C4 durchgeschaltet werden und somit alle Verbraucher 70 bis 73 wieder eingeschaltet sind.

Bei der dritten Zentralfunktion handelt es sich um eine "Anwesenheitssimulation", welche über den Taster 67 aktivierbar ist. Für die Anwesenheitssimulation sind in einem Speicherbereich der Recheneinheit des Mastermoduls über eine Woche sämtliche an den Schaltern 60, 63 und Tastern 61, 62 vorgenommenen Schaltvorgänge gespeichert. Wird über den Taster 67 der Zentraleingang AW aktiviert, so laufen in zeitlicher Folge über eine Woche sämtliche Schaltvorgänge, wie sie erfaßt wurden wieder ab. D.h., daß anhand der aufgezeichneten Schaltfolgen bei aktivierten Anwesenheitssimulation diese Schaltfolgen automatisch ablaufen und eine äußerst realistische Anwesenheit simulierbar ist. Dabei ist vorgesehen, daß von Woche zu Woche, sollten keine neuen Aufzeichnungen vorhanden sein, die Schaltzeiten in gewissen Grenzen durch eine Art Zufallsprogrammierung verändert werden, so daß von Woche zu Woche nach außen hin der Eindruck entsteht, daß tatsächlich jemand in einem Gebäude anwesend ist.

Die Anwesenheitssimulation hat wiederum gegenüber den beiden anderen Zentralfunktionen eine geringere Priorität, so daß bei aktivierter Anwesenheitssimulation durch Aktivierung der Zentralfunktion "Zentral-AUS" sämtliche zugeordneten Ausgänge C1 bis C4 deaktiviert und die entsprechend zugehörigen Verbraucher 70 bis 73 ausgeschaltet werden.

Insgesamt haben sämtliche Zentralfunktionen eine höhere Priorität als die Standardfunktionen, so daß bei Aktivierung der entsprechenden Zentralfunktion diese stets abläuft, unabhängig davon, ob eine Standardfunktion aktiviert ist oder nicht.

Wie zu Fig. 1 bereits ausgeführt, können die Standardeingänge I1 bis I4 mit einer Halbwellenerkennungsschaltung versehen sein. Mit dieser Halbwellenerkennungsschaltung sind den entsprechenden Standardeingängen aus der Netzversorgung unterschiedliche Schaltsignale zuführbar. So kann die Phase den Standardeingängen I1 bis I4 als Vollwelle, untere Halbwelle oder obere Halbwelle zugeführt werden. Aufgrund der Halbwellenerkennungsschaltung sind die unterschiedlichen Schaltsignale von der Recheneinheit als Schaltsignal zur Schaltung der vorgesehenen Zentralfunktionen auswertbar. Damit können zusätzlich zu den Zentraleingängen auch die Standardeingänge zur Aktivierung der Zentralfunktionen verwendet werden.

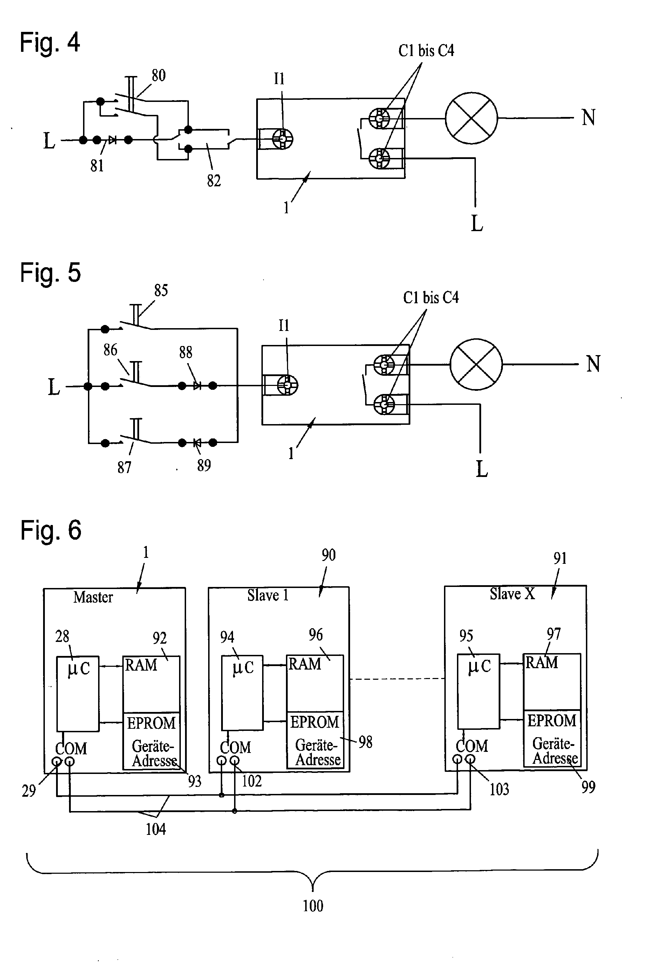

Zur Erzeugung dieser verschiedenen Steuersignale werden ebenfalls die normalen, in einem Haushalt vorgesehenen Schalter oder Taster verwendet. Hierzu zeigt Fig. 4 ein Ausführungsbeispiel einer solchen einfachen Schaltung, durch welche beispielsweise eine der Halbwellen als Schaltsignal erzeugt wird. Zu dem normalen Schalter 80 wird parallel eine Diodenschaltung 81 geschaltet, deren Signal über den Schalter 80 beim vorliegenden Ausführungsbeispiel einer Wechselschaltung 82 zugeführt wird.

Von diesen Wechselschaltung 82 wird das Steuersignal in Form der oberen oder unteren Halbwelle beispielsweise dem Standardeingang I1 zugeführt, durch welchen beispielsweise die Zentralfunktion "Zentral-EIN " aktiviert wird und beispielsweise auch alle Ausgänge C1 bis C4 geschaltet werden. Die Ausgänge C1 bis C4 sind in Figur 4 symbolisch dargestellt. Welches der "modulierten" Spannungssignale - Vollwelle, Unterhalbwelle oder Oberhalbwelle - für welche Zentralfunktion verwendet wird, ist vorab bei der Programmierung der Recheneinheit des Mastermoduls 1 festlegbar. Es ist erkennbar, daß durch eine äußerst einfache Diodenschaltung 81 das entsprechend gewünschte Steuersignal erzeugbar ist, so daß auch für die Realisierung einer solchen zusätzlichen Steuerung der Zentralfunktionen nur ein äußerst geringer Aufwand besteht.

Figur 5 zeigt ein Beispiel, bei welchem drei Schalter 85, 86 und 87 vorgesehen sind, durch welche drei unterschiedliche Schaltsignale erzeugt und beispielsweise dem Eingang I1 des Mastermoduls 1 zuführbar sind. Beim Schalter 85 handelt es sich um einen gewöhnlichen Schalter, wie er bei einer normalen Hausinstallation verwendet wird. Dieser Schalter 85 ist keine Diodenschaltung zugeordnet, so daß beim Schließen dieses Schalter 85 beispielsweise die Standardfunktion der Funktionsgruppe I1 geschaltet wird. Durch entsprechende Programmierung des Einganges I1 kann aber auch bei Anliegen einer Vollwelle erreicht werden, daß beispielsweise hier dann die Zentralfunktion "Zentral-EIN" geschaltet wird. Weiter ist aus Figur 5 ersichtlich, daß dem Schalter 86 eine Diodenschaltung 88 nachgeschaltet ist, welche bewirkt, daß bei geschlossenem Schalter 86 an den Eingang I1 nur die Oberhalbwelle der Netzversorgung L übermittelt wird., Durch entsprechende Programmierung der Recheneinheit des Mastermoduls 1 kann somit erreicht werden, daß bei anliegender Oberhalbwelle am Eingang I1 beispielsweise die Zentralfunktion "Zentral-AUS" geschaltet wird und somit beispielsweise alle Ausgänge C1 bis C4 ausgeschaltet werden.

Dem Schalter 87 ist ebenfalls eine Diodenschaltung 89 nachgeschaltet, durch welche bewirkt wird, daß beispielsweise nur die Unterhalbwelle auf den Eingang I1 durchgeschaltet wird. Durch entsprechende Programmierung der Recheneinheit des Mastermoduls 1 kann somit bei Anliegen eines solchen Signals der negativen Halbwelle bewirkt werden, daß beispielsweise die Zentralfunktion Anwesenheitssimulation aktiviert wird. Die Prioritäten dieser Zentralfunktionen sind dabei identisch wie vorab beschrieben. Auch die Zuordnung der Zentralfunktionen zu den Ausgängen C1 bis C4 über den Wahlschalter 55 und die Taster T1 bis T4 erfolgt identisch, wie vorab beschrieben.

Dies bedeutet, daß aufgrund dieser einfachen Konfiguration eines Schalters mit einer Diodenschaltung entweder auf die separaten Zentraleingänge ZE, ZA, AW verzichtet werden kann oder daß zusätzlich zu diesen Zentraleingängen ZE, ZA oder AW einer oder mehrere Standardeingänge I1 bis I4 zur Steuerung der Zentralfunktionen verwendet werden können. Dies kann beispielsweise dann erforderlich sein, wenn ein Zentraleingang bereits durch einen Zentralschalter in einem Wohnraum schaltbar ist, zu einem späteren Zeitpunkt jedoch eine zweite Schaltmöglichkeit vorgesehen werden soll, dessen Schalter sich in einem anderen Raum befindet. Dort kann parallel zum normalen Lichtschalter ein Taster mit Diodenschaltung installiert werden und über den gleichen Eingang an welchem der Lichtschalter in diesem Raum angeschlossen ist sein moduliertes Steuersignal zur Steuerung der Zentralfunktionen aufschalten.

Wie aus Figur 6 ersichtlich ist, ist erfindungsgemäß auch vorgesehen, daß das gesamte Installationssystem 100 modular aufgebaut ist. Wie in Figur 6 beispielhaft dargestellt ist, besteht das Installationssystem 100 aus dem Master 1, wie dieser zuvor bereits beschrieben wurde sowie aus weiteren Schaltmodulen in Form von Slavemodulen 90 und 91. Wie aus Figur 6 weiter ersichtlich ist, weist das Mastermodul 1, wie bereits beschrieben, eine Recheneinheit in Form des Mikroprozessors 28 auf, welchem ein Arbeitsspeicher und ein EPROM 93 zugeordnet ist. Desweiteren steht der Mikroprozessor 28 mit der Kommunikationsschnittstelle (COM) 29 in Verbindung. Die zwei in Figur 6 weiter dargestellten Slavemodulen 90 und 91 sind ihrerseits ebenfalls mit einer Recheneinheit in Form eines Mikroprozessors 94 bzw. 95 versehen. Auch diesen beiden Mikroprozessoren 94 und 95 ist jeweils ein Arbeitsspeicher 96 bzw. 97 sowie ein EPROM 98 zugeordnet. Auch weisen die beiden Slavemodulen 90 und 91 jeweils eine Kommunikationsschnittstelle 102 bzw. 103 auf. Die Schaltmodule, das Mastermodul 1, und die Slavemodule 90 und 91 stehen über ihre Kommunikationsschnittstellen 29, 102 und 103 über eine Zweidrahtverbindung 104 miteinander in Verbindung. Da sämtliche Schaltmodule, also das Mastermodul 1, wie auch die Slavemodule 90 und 91 im "stand alone"-Betrieb funktionieren, können bei dieser Schaltungsart beliebig viele Slavemodule parallel zu bereits installierten Slavemodulen ergänzt oder auch wieder entnommen werden, ohne daß die bereits installierten Schaltmodule davon tangiert werden.

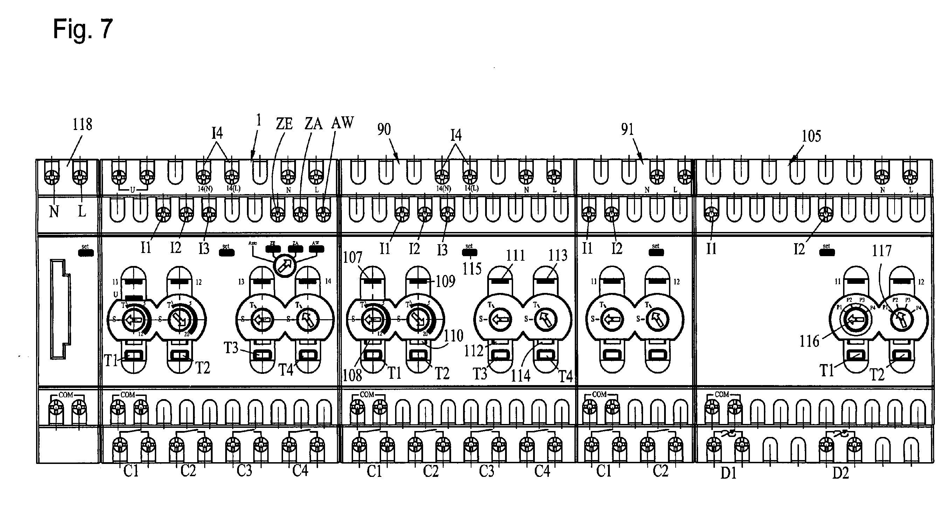

Die Ansteuerung der Ausgänge der Slavemodule 90 und 91 erfolgt dabei einerseits über eigene Standardeingänge, wie dies beispielsweise aus Figur 7 ersichtlich ist, während die Ansteuerung der Ausgänge dieser Slavemodule einerseits durch die eigenen Standardeingänge bewirkt werden kann und andererseits aber auch durch die Zuordnung der Zentralfunktionen des Mastermoduls 1. Dies bedeutet, daß bei Einstellung des Wahlschalters 55 beispielsweise auf die Zentralfunktion "Zentral- AUS", wie dies in Figur 2 dargestellt ist, sämtliche Ausgänge oder ein Teil der Ausgänge der parallel geschalteten Slavemodule 90 und 91 einer Zentralfunktion zuordenbar sind. Die Schaltfunktionen, welche bei anliegen eines Zentralsignales am Mastermodul 1 an den Ausgängen der Slavemodule durchzuschalten sind, wird über die Zweidrahtverbindung und die Kommunikationsschnittstellen 29, 102 und 103 an die Slavemodule übertragen. Wird die Verbindung zwischen den einzelnen Modulen und Verbrauchern getrennt oder fällt eines der Module aus, so sind alle Module auf jeden Fall noch, da sie eigene Standardeingänge aufweisen, weiterhin für ihre eigenen Standardfunktionen vollständig betriebsfähig.

In Figur 7 sind insgesamt vier Schaltmodule dargestellt, wobei ein Mastermodul 1, welches immer vorhanden sein muß, sowie drei weitere Slavemodule 90, 91 und 105 vorgesehen sind. Wie aus der Beschriftung der dargestellten Schaltmodul 1, 90, 91 und 105 hervorgeht, ist das Slavemodule 90 mit Ausnahme der Zentraleingänge ZE, ZA, AW identisch aufgebaut wie das Mastermodul 1. So weist das Slavemodul 90 ebenfalls die Standardeingänge I1, I2, I3 und I4 auf. Desweiteren ist ebenfalls ein Netzanschluß vorgesehen, welcher durch die Anschlußklemmen N und L dargestellt ist. Jedem der Standardeingänge I1 bis I4 ist eine Funktionsgruppe zugeordnet, welche ebenfalls mit den Bezeichnungen I1, I2, I3 und I4 gekennzeichnet sind. Diese Funktionsgruppen sind ausgangsseitig ebenfalls mit Tastern T1, T2, T3 und T4 und entsprechend zugehörigen Kontrolleuchten 107 bis 114 versehen. Weiterhin ist ebenfalls eine Kontrolleuchte 115 mit der Bezeichnung "set" vorgesehen, welche den Programmiermodus optisch kennzeichnet. Weiter sind auch diesen Funktionsgruppen I1 bis I4 insgesamt vier Ausgänge C1 bis C4 zugeordnet. Das heißt, daß das Slavemodul 90, wie auch das Mastermodul 1 insgesamt vier Kanäle aufweist und damit vier Schaltkreise von jedem Schaltmodul schaltbar sind.

Das Slavemodul 91 ist lediglich mit zwei Eingängen I1 und I2 versehen, über welche zwei Funktionsgruppen I1 und I2 ansteuerbar sind. Diese beiden Funktionsgruppen entsprechend beim vorliegenden Ausführungsbeispiel den Funktionsgruppen I3 und I4 des Mastermoduls 1, wie zu Figur 2 beschrieben, wobei hier noch zu bemerken ist, daß auch das Slavemodul 90 diese beiden Funktionsgruppen I3 und I4 aufweist. Diese Funktionsgruppen I1 und I2 des Slavemoduls 91 dienen für einfache Schaltvorgänge, welche entweder in einem Schaltmodus durch den normalen Schalter oder in einem Tastermodus durch einen Taster aktivierbar sind. Das Slavemodul 91 weist seinerseits zwei Ausgänge C1 und C2 auf, so daß durch dieses Slavemodul 91 zwei Schaltkreise schaltbar sind.

Das Slavemodul 105 kann beispielsweise eine programmierbare Steuerung für verschiedene Funktionen beinhalten. So kann es sich hier beispielsweise um eine Rolladensteuerung handeln. Auch dieses Slavemodul 105 weist zwei Eingänge I1 und I2 auf, welche ebenfalls zwei Funktionsgruppen I1 und I2 zugeordnet sind. Als Ausgänge sind hier ebenfalls zwei Stück D1 und D2 vorgesehen. Bei Aktivierung der Eingänge I1 und I2 sind die beiden Ausgänge D1 und D2 bei entsprechender Programmierung der Funktionsgruppen I1 und I2 mit entsprechenden Schaltfolgen beaufschlagbar. Es ist erkennbar, daß auch hier für jede Funktionsgruppe I1 oder I2 jeweils ein Funktionsschalter 116 bzw. 117 vorgesehen ist, durch deren entsprechende Einstellungen vorab programmierbare Programmabläufe P1 bis P4 abrufbar sind. Desweiteren ist aus Figur 7 ersichtlich, daß auch die beiden Slavemodule 91 und 105 mit Tastern T1 und T2 versehen sind, welche den Ausgängen C1 und C2 bzw. D1 und D2 zugeordnet sind. Auch mittels dieser Taster T1 und T2 können die zugehörigen Ausgänge C1, C2 und D1, D2 über die Kommunikationsschnittstellen, welche an allen Modulen mit COM gekennzeichnet sind, zusätzlich mit einer Zentralfunktion beaufschlagt werden.

Zusätzlich zu diesen Slavemodulen kann hier noch ein Programmiermodul 118 vorgesehen sein, welches als PC-Schnittstelle ausgebildet ist. Auch diese Programmierschnittstelle weist eine Kommunikationsschnittstelle mit der Kennzeichnung COM auf, über welche diese Programmmierschnittstelle parallel mit allen Schaltmodulen 1, 90, 91 und 105 zu deren Programmierung in Verbindung steht. Anstatt eines solchen Programmiermodules 118 kann das Mastermodul 1 auch mit einer USB-Schnittstelle zur Programmierung versehen sein.

Nachfolgend sind nun die Funktionen des dargestellten Installationssystems 100 nochmals näher zusammengefaßt.

### USB Schnittstelle im System

Die PC USB Schnittstelle wirkt als neuer Master. Die ID Nummer 0 ist fest für eine Masterfunktion reserviert. Wird diese 0 bei einer Abfrage erkannt, dann klinkt sich das Grundgerät in seiner Masterfunktion aus, denn es ist nur ein Master zulässig. Die USB Schnittstelle hat dann die volle Masterfunktion bei direktem PC Zugriff. Ist die USB Funktion nicht mehr erwünscht, dann wird per Befehl wieder an den Gerätemaster übergeben und die Systemfunktion hergestellt.

### Anwendungen USB Schnittstelle

Die USB Schnittstelle ist für die Fertigung zur Konfiguration der Geräte vorgesehen, gleichzeitig für die Entwicklung zum Gerätetest. Später soll, falls gewünscht, der Kunde die Möglichkeit erhalten, durch diese PC Schnittstelle seine eigene Zuordnung der Eingänge und Ausgänge des LUXOR Gerätes zu konfigurieren.

Gerätefunktion im System bzw. Einzelgerät

### Autonome Gerätefunktion

Jedes Gerät muss einzeln, ohne dass es je einmal im System war voll autonom funktionieren. Ist in einem funktionsfähigen System ein Fehler aufgetreten, so müssen alle Geräte ohne die übergeordneten Funktionen autonom weiter funktionieren. Ist der Fall B aufgetreten und dabei das Netz ausgefallen, so ist die zugeordnete und im RAM gespeicherte ID verloren gegangen. Auch hier ist die volle autonome Funktion der einzelnen Geräte möglich.

### Zentral Funktionen

Alle Geräte, welche an der COM-Schnittstelle angeschlossen sind, erhalten zusätzlich die übergeordneten Funktionen der Zentraleingänge ZE und ZA und AW sowie die zugeordnete Halbwellenerkennung. Der Master fragt zyklisch alle Slave's, ob eine Zentralfunktion anliegt. Ist das der Fall, dann verteilt der Master diese Meldung an alle Teilnehmer, welche durch ihre ID Nummer dafür konfiguriert sind.

### Prioritäten der Zentralfunktionen

Die höchste Priorität nimmt die Zentral-EIN-Funktion "ZE" ein (Paniktaster). Während der ZE-Funktion wirkt kein anderer Schalter oder Taster. Diese Funktion kann nur von ZE wieder aufgehoben werden. Danach werden die zuletzt gespeicherten Schaltzustände wieder hergestellt und die Timerfunktionen neu gestartet.

Schaltereingänge werden nicht gespeichert, diese werden auf den momentanen Zustand aktualisiert.

Die nächste Priorität wird von der Zentral-AUS-Funktion "ZA" eingenommen. Diese Funktion schaltet die Relais auf "AUS" und ist dann wieder frei für manuelle Taster oder Schalterfunktionen.

Die niedrigste Priorität nimmt die Anwesenheitssimulation "AW" ein. Während der ZA-Funktion wirkt kein anderer Schalter oder Taster. Ein Schalter mit Anzeige aktiviert die Anwesenheitssimulation. Nur das Ausschalten dieses Schalters kann die Anwesenheitssimulation abschalten. Eine ZE-Funktion kann sich dieser AW überlagern, ebenso eine ZA-Funktion. Die AW nimmt nach dem Drücken einer ZA-Funktion ihre Schaltungen wieder auf.

### Geräteadresse

Die Adresse ist 40 Bit lang und setzt sich wie folgt zusammen:

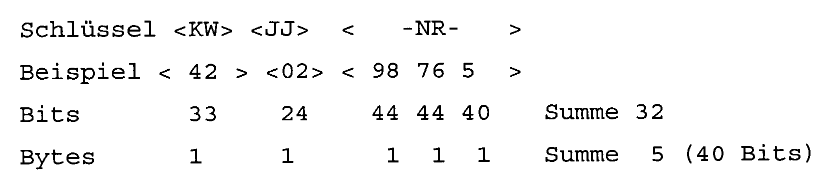

Diese Gerätenummer wird zusammen mit den Default-Daten, am Prüfautomat nach dem abgeschlossenen Endtest ins Geräte EPROM geschrieben.

### Teilnehmerzahl

Es könne beispielsweise 15 Teilnehmer und ein Master vorgesehen sein.

### BUS-Kurzschlusserkennung

Das Gerät prüft bei jedem Senden des Protokolls, ob der Bus funktionsfähig ist; wenn nicht wird das Senden sofort abgebrochen.

### Taster Entprellzeit

Die Tastereingänge übertragen die Netzspannung in Form von Halbwellen (HW) zum LUXOR Gerät, d.h. zum jeweiligen Schaltmodul. Die Reaktionszeit eines Tasterdrucks soll <= 200 ms sein. Das Schaltmodul hat 8 Schaltereingänge zu erkennen und zu entprellen, sofern das System aus den Schaltmodulen 1, 90 und 91 aus Fig. 7 besteht. Wenn drei Halbwellen zur Entprellung bewertet werden, benötigt man 60 ms. Es ist also eine Taster-Reaktionszeit von 100 ms realisierbar. Die Eingänge werden im 1 ms Abstand parallel abgefragt und in einem Zähler auf Entprellung geprüft.

### Funktionsmöglichkeiten

Es stehen beispielsweise 5 Funktionsblöcke zur Verfügung. Diese können mit einem Wahlschalter als Einzelfunktion gewählt werden.

### Schalter

Die Schalterfunktion schaltet, nach einer Entprellzeit und einer Netzhalbwellenerkennung, die zugeordneten Ausgänge direkt auf EIN/AUS. Ist der Schaltereingang I1 ... I4 spannungsführend, so wird die zugeordnete Schaltfunktion ausgeführt und im spannungslosen Zustand wieder abgebrochen.

### Taster

Bei den Tasterfunktionen wird jeder erkannte Tasterdruck gespeichert und wirkt an den zugeordneten Ausgängen wie ein Stromstossschalter. Netzhalbwellen werden ebenfalls erkannt und nehmen Sonderfunktionen ein.

### Kurzzeit nachschaltbar mit Abschaltvorwarnung (Treppenhausautomat)

Diese Funktion ist für eine Tastschaltung ausgelegt. Diese startet den Timer, welcher über die Potentiometerfunktion auf die gewünschte Länge einstellbar ist. Der Timer hat für eine volle Potentiometerlänge eine Mindestzeit von einer Minute oder ist im Raster von 5 bis maximal 60 Minuten begrenzbar. Dabei sind folgende Funktionen realisierbar:
Kurzzeit EIN/AUS schaltbar mit Abschaltvorwarnung (Kellerlicht)
Kurzzeit nachschaltbar ohne Abschaltvorwarnung (Zirkulationspumpe)

### Automatische Teilnehmererkennung

### COM Verbindung

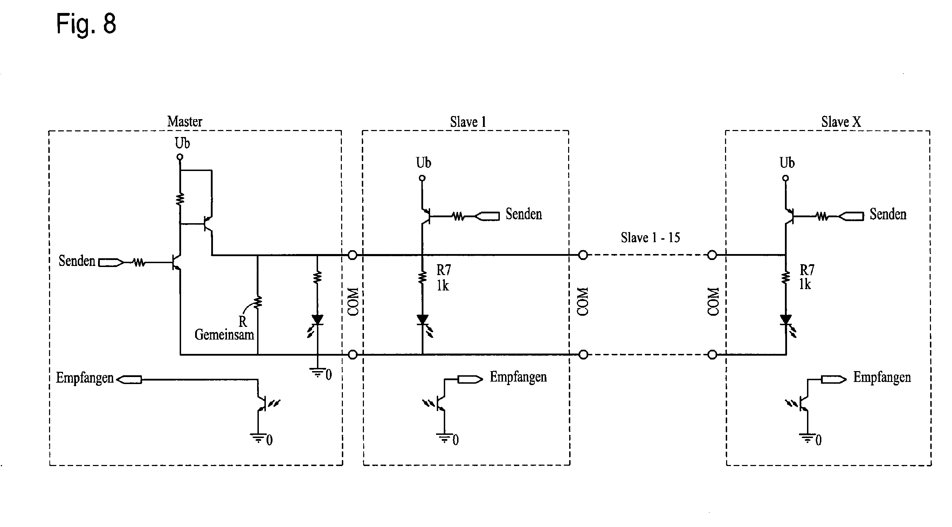

Alle Teilnehmer besitzen einen Zweidraht Kommunikationsanschluss COM und sind untereinander durch diesen Anschluss parallel miteinander verbunden, wie dies beispielsweise aus Fig. 6 ersichtlich ist. Diese COM Schnittstelle ist als "wired or" ausgelegt. Es führen also mehrere Transistor Kollektorausgänge an einen gemeinsamen Widerstand R-Gemeinsam im Master, wie dies in Fig. 8 schematisch dargestellt ist.

### Systemerkennung nach Netzwiederkehr (Inbetriebnahme)

Nach einem Netzausfall erkennt der Master einen Reset und setzt den Befehl ab, alle Teilnehmer (Slave's) melden. Jeder Teilnehmer verfügt über einen eigenen µC, welcher dieses Signal erkennt und darauf reagiert. Aus Systemgründen befinden sich alle, außer dem Master im Empfangsbetrieb, jeder versucht nach der Masteranfrage sich mit seiner eigenen Geräteadresse zu melden, welche er bei der Geräteherstellung, unverlierbar in einem EPROM, mit auf den Weg bekommen hat.

### Geräteadresse und Identnummer

Jedes Gerät hat eine eigene Nummer, es gibt keine Doppelbelegung. Die Geräteadresse besteht aus Kalenderwoche, dem Jahr und einer 5-stelligen Durchlaufnummer. Es können also 99.999 Geräte pro Woche unterschieden werden. Die Adresse ist 40 Bit lang und setzt sich wie folgt zusammen:

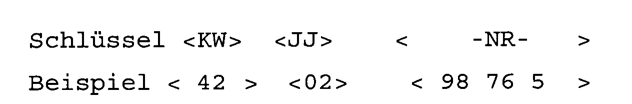

### Kommunikation Master/Slave

Der Master geht nach dem Senden des Kommandos "alle melden" in den Empfangsbetrieb, hört dort an seinem gemeinsamen Widerstand alle parallel geschalteten Slave's, unter Umständen gleichzeitig, antworten.

Diese Kollisionsmöglichkeit wird dadurch unterbunden, dass jeder Slave vor dem Senden seiner Geräteadresse im Bus mithört, ob ein anderer Slave bereits schon aktiv ist. Wenn diese Situation eintritt, dann wird die Geräteadresse von dem Slave, welcher das erkannt hat, nicht zum Master gesendet. Der Weg für den zuerst gestarteten Slave ist frei. Der Master sendet dem Slave, welcher zuerst erfolgreich gestartet ist, eine Identnummer (ID) mit einer zusätzlichen Checksumme CRC zurück. Die Checksumme ist redundant und dient zur Datensicherheit bei der Signalauswertung. Diese ID wird im Slave im flüchtigen Speicher RAM gehalten. Der Master vergibt bei 15 angeschlossenen Slaves beispielsweise 15 ID Nummern an die Slave's, wobei diese ID Nummern kurz und schnell zu übertragen sind. Der Master muss bei der Festlegung der Zentralfunktionen wissen, welchen Teilnehmer dies betrifft und hält für diese Funktion in seinem eigenen Speicher eine Belegliste.

Eine Zentralfunktion wirkt auf das ganze System und wird bei der manuellen Programmierung der einzelnen Ausgänge, auch bei Slave's, zugeordnet und vom Master verwaltet

### Belegliste

### Restliche abfragen

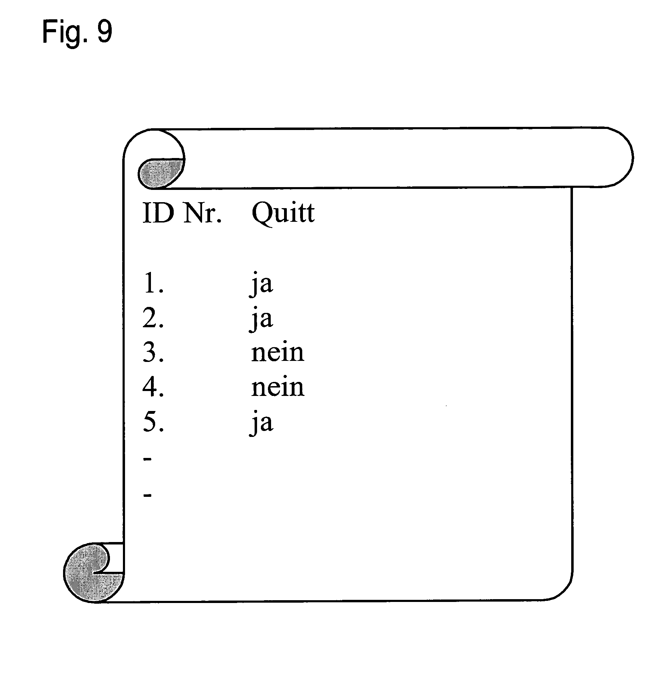

Der Master startet nach seiner ID Nummer Vergabe eine neue Anfrage im Abfrageverfahren (polling) mit dem Befehl alle Teilnehmer melden. Jeder Slave, welcher mit einer ID Nummer bestätigt wurde, meldet sich bei der neuen Anfrage nicht mehr. Es gibt also immer weniger nicht bestätigte Slave's, z.B. ID 1, 2 und ID 5 sind quittiert und eingetragen, wie in Fig. 9 beispielhaft dargestellt. Diese werden bei der neuen Anfrage für eine ID Nummer Vergabe nicht mehr genannt. Nach der 15-ten Anfrage müssten alle Slave's erkannt und mit ID Nummern versehen sein.

### System Erweiterung während dem Betrieb (ähnlich plug and play)

Die Vorgehensweise "abfragen, hören, erkennen und bestätigen" wird in einem rollierenden Verfahren fortgesetzt. Dadurch ist es möglich, dass ein neuer Teilnehmer während dem Betrieb des Systems ohne Kodierungen oder manuelle Zuordnung erkannt wird und seine Funktion aufnimmt.

Durch eine neue Zuordnung der Zentralfunktionen kann nun dieser neue Teilnehmer mit seinen Funktionen eingebunden werden.

### System Reduzierung während dem Betrieb (ähnlich plug and play)

### Netz wird getrennt

Wird ein Teilnehmer aus dem System entfernt, dann verliert er im stromlosen Zustand seine im RAM gehaltene ID Nummer und kann jederzeit in ein neues System durch neue Zuordnung der ID Nummer aufgenommen werden.

### COM Verbindung wird getrennt

Wird der Teilnehmer nur von der COM Schnittstelle getrennt, so erkennt das der Slave und löscht seine eigene ID Adresse. Danach kann er ebenfalls in ein neues System durch neue Zuordnung der ID Nummer aufgenommen werden.

### ID Korrektur im Master

Erhält der Master nach einer mehrfachen Abfrage der bei ihm quittierten ID Nummer keine Antwort vom Slave, so löscht er diese ID Nummer in seinem EPROM, damit diese Nummer wieder für neue Teilnehmer frei ist.

### Funktion ohne Systemanbindung (stand alone)

Befindet sich ein Gerät nicht im System, also keine COM Verbindung, und damit keine ID Nummer Vergabe durch einen Master, so ist das Gerät in seinen Funktionen voll funktionsfähig und kann seine eigenen Zentralfunktionen, wenn sie von diesem Gerät ausgelöst wurden, berücksichtigen (Stand alone). Eine ins System übergreifende Zentralfunktion ist nicht möglich.

### Gerätekonfiguration

### Grundkonfiguration (default)

Die Geräte erhalten nach der Produktion ihre Grundkonfiguration durch eine PC- Systemkonfigurationssoftware. Jedem Funktionsblock ist sein zugehöriger Eingang und sein zugehöriger Ausgang zugeordnet. Z.B. dem Funktionsblock 2 ist der Eingang I2 und der Ausgang C2 zugeordnet. Die Funktionszuordnung eines Funktionsblocks ist gerätespezifisch ausgelegt.

### Gerätezuweisung zur Konfiguration

Erkennt das System (Master) eine USB Schnittstelle, so erhält diese die volle Masterfunktion. Über die COM Schnittstelle werden alle angeschlossene Teilnehmer in Konfigurationsbereitschaft gesetzt. Alle Teilnehmer, außer dem Master im System, signalisieren gleichzeitig ihre Bereitschaft für eine Konfiguration, durch gleichzeitiges Blinken der grünen LED's I1 und I2 im Blinkrhythmus 2/3 ein, 1/3 aus.

### Gerätewahl

Werden an dem gewählten Teilnehmer die den LED zugeordneten Tasten C1 und C2 beide gleichzeitig für länger als 3 Sekunden gedrückt, dann erlaubt dieser Slave eine direkte Kommunikation über die USB Schnittstelle.

### Konfiguration laden

Der Salve signalisiert seine Bereitschaft durch Abschalten der LED- Blinkfunktion und gleichzeitig permanentes Einschalten seiner roten SET LED. Zusätzlich wird die Konfigurationsbereitschaft an die USB Schnittstelle gemeldet, diese deaktiviert dann die restlichen Slave's. Diese restlichen Slave's gehen in ihren Normalbetrieb ohne LED Zustandsmeldungen. Jetzt wird durch einen Konfigurationsbefehl die am PC erstellte Systemkonfiguration zum Slave übertragen, mit anschließender Rückgabe der Masterfunktion an das System.

### Mehrere Geräte gleichzeitig konfigurieren

Eine gleichzeitige Konfiguration mehrerer Systemteilnehmer kann möglich sein, ist jedoch derzeit nicht vorgesehen.

### Konfiguration rücklesen

Befindet sich ein Teilnehmer in dieser Konfigurationsbereitschaft, dann können über einen Konfigurations- Lesebefehl über die USB Schnittstelle diese im Gerät befindlichen Konfigurationsdaten auf den PC zurückgelesen werden.

### Konfigurationen pos, neg, "voll" und Gruppierungen (mit PC- Systemkonfigurationssoftware)

Am PC werden die Funktionsblöcke zur Auswahl ihrer Funktionen, per Mausklick, auf dem Bildschirm dargestellt.

### Hardware

### Relaispulsen

Zur Leistungsreduzierung der Gesamtstromaufnahme zeigt sich das Pulsen der Relaislasten am wirkungsvollsten. Dies ist bei 2 und 4 Kanalausführungen notwendig. Die Relaisansprechzeiten liegen bei 7 ms und die Remanenzzeiten bei 3ms. Um eine sichere Ansprechzeit für das Relais zu erreichen, wird bei jedem Einschaltvorgang ein 50 ms Impuls direkt vor dem ½ KHz Taktsignal ausgegeben. Dieser 50 ms Impuls wird während der Relais-Einphase alle 5 Sekunden wiederholt, damit auch Netzeinbrüche sicher wieder zugeschaltet werden.

### LED Ausführungen

Es gibt eine rote LED für die Funktion SET, diese signalisiert dass die Geräte im System angesprochen sind und der "Bus" hier keine anderen Funktionen übernimmt. Es gibt weitere gelbe LED's, welche einen Relaiszustand oder Signaleingang anzeigen.

### LED Geräte- Zustandsanzeigen

Die SET LED rot steht aktiv ohne zu blinken:
Mit dem Drehschalter ist eine der Funktionen Zentral EIN/AUS/AW gewählt.

Die SET LED rot blinkt im Grundgerät:
Der "BUS" hat Kurzschluss oder ist nicht verbunden.

Die grünen LED's I1 und I2 blinken im Rhythmus 2/3 - 1/3 hell/dunkel:
Nach dem Senden des Befehls Konfiguration signalisieren alle Systemteilnehmer, außer dem Master, ihre Bereitschaft für eine Konfiguration.

## Patentansprüche

1. Installationssystem (100) zur Steuerung einer elektrischen Gebäudeinstallation mit einer programmierbaren Recheneinheit (28), welcher zur Schaltung elektrischer Verbraucher (70, 71, 72, 73) über Steuerleitungen Steuersignale zuführbar sind,
**dadurch gekennzeichnet,**
**daß** in der Recheneinheit (28, 94, 95) mehrere, unterschiedliche Schaltvorgänge steuernde Funktionsgruppen (I1, I2, I3, I4, ZE, ZA, AW) zur Steuerung von Standard- und Zentralfunktionen (ZE, ZA, AW) gespeichert sind, die wahlweise einem oder mehreren Eingängen (I1, I2, I3, I4, ZE, ZA, AW) der Recheneinheit (28, 94, 95) zuordenbar sind, und
**daß** einzelne oder alle Funktionsgruppen (I1 bis I4) einem oder mehreren Ausgängen (C1, C2, C3, C4, D1, D2) der Recheneinheit (28, 94, 95) derart zuordenbar sind, daß bei Anliegen eines Steuersignals an einem der Eingänge (I1 bis I4, ZE, ZA, AW) die an den entsprechend zugeordneten Ausgängen (C1, C2, C3, C4, D1, D2) angeschlossenen Verbraucher (70 bis 73) gleichzeitig mit der entsprechenden Schaltfunktion der aktivierten Funktionsgruppe (I1 bis I4, ZE, ZA, AW) schaltbar sind und,
**daß** die Recheneinheit (28) für die Zuordnung der Zentralfunktionen (ZE, ZA, AW) zu den Ausgängen (C1 bis C4, D1, D2) zusätzlich mit manuell bedienbaren Tastern (T1, T2, T3, T4) versehen ist.

2. Installationssystem nach Anspruch 1, **dadurch gekennzeichnet, daß** die Recheneinheit (28) Funktionsgruppen (ZE, ZE, AW) aufweist, die zentrale Schaltvorgänge bewirken und, daß jeder Funktionsgruppe (ZE, ZE, AW) ein Zentraleingang (ZE, ZE, AW) zugeordnet ist und, daß die Zentralfunktionen (ZE, ZE, AW) wahlweise mehreren identischen und/oder verschiedenen Ausgängen (C1 bis C4, D1, D2) zuordenbar sind.

3. Installationssystem nach Anspruch 1, **dadurch gekennzeichnet, daß** wenigstens ein Standardeingang (I1 bis I4) vorgesehen ist, welcher einer oder mehreren Funktionsgruppen (I1 bis I4) zuordenbar ist, die einen zentralen Schaltvorgang bewirken und,
daß der Standardeingang (I1 bis I4) einer Funktionsgruppe (I1 bis I4) zuordenbar ist, die eine Standardfunktion bewirkt und,
daß der Standardeingang (I1 bis I4) mit einer Signalerkennungsschaltung (6, 7, 8, 9) versehen ist, durch welche unterschiedliche, am Standardeingang (I1 bis I4) anliegende Schaltsignale auswertbar sind und,
daß die Recheneinheit (28) in Abhängigkeit des jeweiligen Eingangssignals die Standardfunktion (I1 bis I4) oder die Zentralfunktion (ZE, ZA, AW) aktiviert.

4. Installationssystem nach Anspruch 2 und 3, **dadurch gekennzeichnet, daß** zur Schaltung der Zentralfunktionen (ZE, ZA, AW) und der Standardfunktionen (I1 bis I4) sowohl Zentraleingänge (ZE, ZA, AW) als auch Standardeingänge (I1 bis I4) mit Signalerkennungsschaltung (6, 7, 8, 9) vorgesehen sind.

5. Installationssystem nach einem der Ansprüche 1 bis 4, **dadurch gekennzeichnet, daß** die Auswahl einer Zentralfunktion durch einen Wahlschalter (55) erfolgt, der aus einer neutralen Automatikstellung (Auto) in eine die jeweiligen Zentralfunktion kennzeichnende Stellung (ZE, ZA, AW) bringbar ist und,
daß den Ausgängen (C1 bis C4, D1, D2) jeweils ein Taster (T1, T2, T3, T4) zugeordnet ist, durch dessen Betätigung der jeweils zugehörige Ausgang (C1 bis C4, D1, D2) der gewählten Zentralfunktion (ZE, ZA, AW) zuordenbar ist und,
das nach Zuordnung aller gewünschten Ausgänge (C1 bis C4, D1, D2) der Wahlschalter (55) in seine neutrale Automatikstellung (Auto) rückstellbar ist und die getroffene Auswahl der Ausgänge (C1 bis C4, D1, D2) für die gewählte Zentralfunktion (ZE, ZA, AW) in der Recheneinheit (28) abgespeichert wird.

6. Installationssystem nach einem der Ansprüche 1 bis 5, **dadurch gekennzeichnet, daß** jeder Funktionsgruppe (I1 bis I4) zur Schaltung einer Standardfunktion (I1 bis I4) ein Funktionsschalter (14, 15, 16, 17, 116, 117) zugeordnet ist, durch welchen die Schaltungsart eines Standardsignals wahlweise auf den Wert "Schaltsignal" oder "Tastsignal" einstellbar ist.

7. Installationssystem nach einem der Ansprüche 1 bis 6, **dadurch gekennzeichnet, daß** wenigstens eine Funktionsgruppe (I1, I2) zur Schaltung einer Standardfunktion eine Zeitschaltfunktion aufweist.

8. Installationssystem nach Anspruch 7, **dadurch gekennzeichnet, daß** die Zeitschaltfunktion mittels eines Funktionsschalters (14, 15) anwählbar ist und, daß mittels dieses Funktionsschalters (14, 15) wahlweise auch die Schaltungsart eines Standardsignals wahlweise auf den Wert "Schaltsignal" oder "Tastsignal" einstellbar ist, und daß über den Funktionsschalter (14, 15) das Zeitintervall für die Zeitschaltfunktion einstellbar ist.

9. Installationssystem nach einem der Ansprüche 1 bis 8, **dadurch gekennzeichnet, daß** die eingestellten oder programmierten Funktionen und Zuordnungen der Einund Ausgänge (I1 bis I4, ZE, ZA, AW und C1 bis C4, D1, D2) mittels optischer Anzeigeelemente (35, 36, 37, 38, 39, 40, 41, 42, 43, 44, 45, 46, 107, 108, 109, 110, 111, 112, 113, 114, 115) anzeigbar ist.

10. Installationssystem nach einem der Ansprüche 1 bis 9, **dadurch gekennzeichnet, daß** als Schaltsignal zur Aktivierung der Funktionsgruppen (I1 bis I4, ZE, ZA, AW) die Phase (L1, L2, L3) der Netzspannung verwendet wird.

11. Installationssystem nach Anspruch 3 oder 4, **dadurch gekennzeichnet, daß** als Schaltsignal zum Aktivieren einer Zentralfunktion (ZE, ZA, AW) über einen Standardeingang (I1, bis I4) die obere, untere Netzhalbwelle oder die volle Sinuswelle der Netzspannung verwendet wird und,
daß der entsprechende Standardeingang (I1 bis I4) zur Signalerkennung eine Halbwellenerkennungsschaltung (6, 7, 8, 9) aufweist.

12. Installationssystem nach einem der Ansprüche 1 bis 11, **dadurch gekennzeichnet, daß** der Ausgang (C1 bis C4, D1, D2) jeder einzelnen Funktionsgruppe mit zwei Anschlüssen versehen ist, von welchen einer an der Phase (L1, L2, L3) der Netzversorgung unabhängig von der Steuerphase (L1, L2, L3) des zugehörigen Eingangs (I1, I2, I4, ZE, ZA, AW) angeschlossen ist und,
daß der zweite Anschluss des Ausgangs (C1 bis C4, D1, D2) zum jeweils anzusteuernden Verbraucher (70, 71, 72, 73) führt und,
daß bei Aktivierung des Ausgangs (C1 bis C4, D1, D2) die Phase (L1, L2, L3) zum Verbraucher (70 bis 73) durchschaltbar ist.

13. Installationssystem nach einem der Ansprüche 1 bis 12, **dadurch gekennzeichnet, daß** die Recheneinheit (28) mit einer Schnittstelle (118) versehen ist, über welche eine externe Programmierung der Schaltfunktionen der Funktionsgruppen (I1 bis I4, ZE, ZA, AW) durchführbar ist und,
daß über diese Schnittstelle (118) eine gewünschte Zuordnung der Eingänge, Ausgänge und Funktionsgruppen voreinstellbar ist.

14. Installationssystem nach einem der Ansprüche 1 bis 12, **dadurch gekennzeichnet, daß** mehrere mit einer oder mehreren Schaltfunktionen versehene Schaltmodule (1, 90, 91, 105) vorgesehen sind und,
daß jedes der Schaltmodule eine Kommunikationsschnittstelle (COM, 29, 102, 103) aufweist, über welche die Schaltmodule (1, 90, 91, 105) über eine Zweidrahtverbindung (104) parallel miteinander verbunden sind und untereinander kommunizieren.

15. Installationssystem nach Anspruch 13, **dadurch gekennzeichnet, daß** ein Schaltmodul als Mastermodul (1) mit einer Hauptrecheneinheit (28) ausgebildet ist und mit den Zentralfunktionen (ZE, ZA, AW) versehen ist und, daß die weiteren Schaltmodule (90, 91, 105) als Slavemodule mit unterschiedlichen Schaltfunktionen (I1 bis I4) ausgebildet und jeweils mit einem Mikroprozessor (94, 95) versehen sind und,
das die Zentralfunktionen (ZE, ZA, AW) des Mastermoduls (1) über die Kommunikationsschnittstellen (COM, 29, 102, 103) den Ausgängen (C1 bis C4, D1, D2) der Slavemodule (90, 91, 105) über Taster (T1 bis T4) der Slavemodule (90, 91, 105) zuordenbar sind.

16. Installationssystem nach Anspruch 14 oder 15, **dadurch gekennzeichnet**, das jedes Schaltmodul (1, 90, 91, 105) mit eigenen Eingängen (I1 bis I4) und Ausgängen (C1 bis C4, D1, D2) versehen ist und bei Unterbrechung des Kommunikationsflusses über die Kommunikationsschnittstelle (COM, 29, 102, 103) als eigenständiges Schaltmodul fungiert und seine eigenen Standardschaltfunktionen (I1 bis I4) weiterhin bei Anliegen eines Schaltsignals am eigenen Eingang (I1 bis I4) ausführt.

17. Installationssystem nach einem der Ansprüche 14 bis 16, **dadurch gekennzeichnet, daß** jedes der Schaltmodule (1, 90, 91, 105) mit einer eindeutigen Geräteadresse ausgestattet ist und,
daß die Geräteadresse aus der Kalenderwoche und dem Jahr der Herstellung des Schaltmoduls in Kombination mit einer fünfstelligen Durchlaufnummer besteht und, daß diese Geräteadresse über die Kommunikationsschnittstelle (COM, 29, 102, 103) an das Mastermodul (1) übergebbar und dort abspeicherbar ist.

18. Installationssystem nach einem der Ansprüche 1 bis 17, **dadurch gekennzeichnet, daß** den Zentralfunktionen (ZE, ZA, AW) eine höhere Priorität zugewiesen ist als den Standardfunktionen (I1 bis I4), so daß bei Aktivierung einer Zentralfunktion (ZE, ZA, AW) diese stets ausgeführt wird, unabhängig davon, ob eine Standardfunktion (I1 bis I4) aktiviert ist.

19. Installationssystem nach einem der Ansprüche 14 bis 18, **dadurch gekennzeichnet, daß** den Zentralfunktionen (ZE, ZA, AW) untereinander unterschiedliche Pioritäten zugewiesen sind und,
daß manuell schaltbare Zentralfunktionen (ZE, ZA) Vorrang vor automatisch ablaufenden Zentralfunktionen (AW) haben.

20. Installationssystem nach einem der Ansprüche 1 bis 19, **dadurch gekennzeichnet, daß** als Zentralfunktion eine Anwesenheitssimulation (AW) vorgesehen ist und, daß die Schaltfunktionen der Anwesenheitssimulation (AW) innerhalb einer Woche anhand der manuellen Schaltvorgänge in einer Gebäudeinstallation aufgezeichnet und in einem Speicher der Recheneinheit (28) bzw. Hauptrecheneinheit (28) aufgezeichnet werden und bei aktivierter Anwesenheitssimulation (AW) anhand der aufgezeichneten Schaltzeiten automatisch ablaufen.

21. Installationssystem nach Anspruch 20, **dadurch gekennzeichnet, daß** die Schaltzeiten beim Ablauf der Anwesenheitssimulation (AW) für jeden wöchentlichen Durchlauf nach einem Zufallsprogramm in vorbestimmbaren zeitlichen Grenzen veränderbar sind.
